# EUROPEAN PATENT SPECIFICATION

(11) **EP 1 239 006 B1**
(45) Date of publication and mention of the grant of the patent: **20.07.2005**
(21) Application number: 02405128.6
(22) Date of filing: 21.02.2002
(51) Int. Cl.: C08K 5/00, C08K 5/16, C08K 5/32, C08K 5/34

(54) **Process for reducing the residual aldehyde content in polyester and polyamide compositions**
Verfahren um den Restaldehygehalt in Polyester- und Polyamidzusammensetzungen zu reduzieren
Procédé de reduction la teneure limitée en aldehyde de compositions de polyester et polyamide

(30) Priority: 02.03.2001 US 273127 P; 12.03.2001 US 275026 P; 30.04.2001 US 287927 P; 09.10.2001 US 327943 P
(43) Date of publication of application: 11.09.2002
(73) Proprietor: Ciba Specialty Chemicals Holding Inc., 4057 Basel (CH)
(72) Inventor: Odorisio, Paul Angelo, Leonia, NJ 07605 (US); Andrews, Stephen Mark, New Fairfield, CT 06812-2913 (US); Lazzari, Dario, 40138 Bologna (IT); Simon, Dirk, 67112 Mutterstadt (DE); King, Roswell Easton, Pleasantville, NY 10570 (US); Stamp, Melissa, Dover, DE 19904 (US); Reinicker, Roger, Hockessin, DE 19707-9282 (US); Tinkl, Michael, 79639 Grenzach-Wyhlen (DE); Berthelon, Natacha, 68120 Pfastatt (FR); Müller, Daniel, 4051 Basel (CH); Hirt, Urs, 4132 Muttenz (CH)

(56) References cited:
- EP-A- 0 311 568
- EP-A- 0 867 467
- WO-A1-01/83617
- US-A- 5 021 479
- US-A- 5 045 583

## Description

A mixture of a polyester, such as poly(ethylene terephthalate) PET, or a polyamide, and a suitable compound selected from the group consisting of the hydroxylamine, substituted hydroxylamine, nitrone and amine oxide stabilizers, when extrusion compounded exhibits a lower residual aldehyde content than does polyester or polyamide alone when similarly treated. The invention pertains to any polyester or polyamide used in the manufacture of fibers, films or molded articles. For instance bottles or containers which are used to store consumer materials, for example food, beverages and water.

Acetaldehyde is known as a decomposition product of polyesters such as PET. The acetaldehyde imparts an undesirable taste or flavor to bottled water stored in PET bottles. It has been a long sought objective of the industry to reduce the level of acetaldehyde which migrates out of the PET bottle walls into the water or other beverage stored therein. A number of engineering or design changes to extruders, injection molding machines for preforms and bottle making machinery have been made to minimize formation of acetaldehyde when poly-(ethylene terephthalate) PET is processed. Modification to the PET composition itself have been made to lower its melting point or its melt viscosity in order to allow less severe thermal or mechanical damage when PET is processed into preforms or bottles.

Aldehydes may be formed in polyamides, for instance polyamide 6 and polyamide 6,6, under conditions of thermal stress. These aldehydes initiate a chain of events that lead to unwanted yellowing and a reduction in mechanical properties.

U.S. 4,361,681 teaches that polyester containing anhydride end-cap agents have a reduced acetaldehyde generation rate.

U.S. 5,459,224 discloses polyesters having 4-oxybenzylidene end-cap agents to impart improved weatherability and photostability, but no mention is made as to evolution of acetaldehyde. However, it is indicated that such polyesters are suitable for food and beverage packaging.

Polyesters can be synthesized by a number of routes known in the art using a variety of catalyst systems. EP-A-0 826 713 teaches that lower levels of acetaldehyde occur during copolymerization of PET when a phosphite such as bis(2,4-di-tert-butylphenyl)pentaerythritol phosphite is present during the polymerization.

U.S. 4,837,115; U.S. 5,258,233; U.S. 5,266,413; U.S. 5,340,884; U.S. 5,648,032; U.S. 5,650,469; WO-A-93/20147; WO-A-93/23474; WO-A-98/07786 and WO-A-98/39388 teach the use of polyamides as a means of reducing the concentration of acetaldehyde, presumably via a Schiff-base reaction with the aldehyde, which is reversible in the presence of water.

EP-A-0 191 701 describes biaxially oriented containers having excellent barrier properties said container comprising a blend of a poly(ethylene terephthalate) resin and an ethylene-vinyl alcohol copolymer resin. This reference is focused on improved gas barrier properties and is silent as to any reduction of acetaldehyde content.

Japanese Sho 62-257959 describes biaxially stretched vessels built of synthetic resin consisting of poly(ethylene terephthalate) blended with a copolymer of a polyamide, or blended with ethylene-vinyl alcohol at a weight fraction of 0.1 to 15 percent. The examples are limited to a single EVOH polymer (EVEL G110, Kuraray Co.). It is taught that a lower level of acetaldehyde occurs when the EVOH polymer is present.

EP-A-0 714 832 teaches a method of manufacturing a container comprising poly(ethylene terephthalate), polycarbonate or PEN polyester with an additive in the bottle wall which binds acetaldehyde. The additive is generally described as a polyamide.

U.S. 5,656,221 describes a process of producing polyester with reduced acetaldehyde concentration using certain catalysts or inert gas conditions or by adding an amide compound. These include commercial polyamides or long chain aliphatic amide compounds.

U.S. 5,856,385 teaches the use of polyamide or amide-wax to reduce the level of acetaldehyde which occurs when sorbitol-based clarifying agent is heated in polyolefins.

U.S. 4,873,279 discloses a composition comprising a copolyester-carbonate resin, a polyester resin, and a minor amount of a mixture of a polyol and at least one epoxide.

U.S. 4,394,470 discloses a poly(ethylene terephthalate) molding composition with a caramel colorant. The caramel colorant may have been formed in situ from a mono- or disaccharide.

U.S. 5,681,879 discloses a flame-retardant polyester composition comprising a polyester resin, a polyhydric alcohol having not less than 3 hydroxyl groups, an inorganic flame retardant and a halogen-based flame retardant.

WO-A-00/66659 discloses molding compositions comprising PET and polyhydric alcohol additives for the reduction of acetaldehyde formation.

WO-A-01/00724 discloses the use of polyols towards reducing acetaldehyde formation in extruded products of PET.

Hydroxylamine derivatives, such as N,N,-dialkylhydroxylamines and N,N-dibenzylhydroxylamine, are well known as useful stabilizers for a variety of polymeric substrates as is taught for example in U.S. 4,590,231; U.S. 4,668,721; U.S. 4,782,105 or U.S. 4,876,300, the relevant parts of which are incorporated herein by reference.

U.S. 4,649,221; U.S. 4,691,015 and U.S. 4,703,073 teach the use of polyhydroxylamine compounds, hydroxylamines derived from hindered amines and alkylated N,N-dibenzylhydroxylamine derivatives, respectively, towards stabilizing polyolefins. All three patents teach that the polyolefin compositions are stabilized against degradation and/or discoloration upon exposure to heating at elevated temperatures, to the combustion products of natural gas, to gamma irradiation or to prolonged storage at ambient temperature.

U.S. 4,612,393; U.S. 4,696,964; U.S. 4,720,517 and U.S. 4,757,102 disclose the use of various hydroxylamine compounds towards the stabilization of organic materials.

Hydroxylamine stabilizers are also disclosed in U.S. 4,831,134; U.S. 5,006,577; U.S. 5,019,285; U.S. 5,064,883; U.S. 5,185,448 and U.S. 5,235,056.

U.S. 4,666,962; U.S. 4,666,963; U.S. 4,678,826; U.S. 4,753,972; U.S. 4,757,102; U.S. 4,760,179; U.S. 4,929,657; U.S. 5,057,563; U.S. 5,021,479; U.S. 5,045,583 and U.S. 5,185,448 disclose the use of various substituted hydroxylamine stabilizers towards the stabilization of organic materials.

U.S. 5,081,300; U.S. 5,162,408; U.S. 5,844,029; U.S. 5,880,191 and U.S. 5,922,794 disclose the use of saturated hydrocarbon amine oxides towards the stabilization of thermoplastic resins.

U.S. 4,898,901 discloses the use of long chain nitrone compounds as process stabilizers for polyolefin compositions.

Despite the efforts towards a solution for reducing aldehydic contaminates in PET water bottles, for example, there still remains a need for more effective solutions.

The instant invention is useful for any polyester or polyamide where aldehydic compounds, for example acetaldehyde, are formed or evolved during thermal processing of said polyester or polyamide. Thermal processing of said polyester or polyamide includes the synthesis thereof, thermal exposure during solid state polymerization (SSP), any injection molding, injection-blow molding or stretch-blow molding used in the manufacture of preforms, parissons, or bottles and containers, or extrusion of film, or during any melt processing of polyester or polyamide above its glass transition temperature and below its decomposition temperature.

The instant invention provides for a lower amount of contaminants (i.e. aldehydes) in PET water bottles thus providing for improved taste or flavor in bottled water or other bottled beverages in said PET containers. The reduction in the amount of acetaldehyde is highly beneficial in this respect.

Further, the compositions of the present invention impart no unacceptable color or haze to PET bottles. "Haze" is an undesirable, perceptible graying effect.

The instant invention pertains to a process for preventing the formation of aldehydic contaminants during melt processing of (a) an effective stabilizing amount of a polyester or polyamide which comprises incorporating into said polyester or polyamide (b) a compound selected from the group consisting of
i.) hydroxylamine stabilizers,
ii.) O-substituted hydroxylamine stabilizers,
iii.) nitrone stabilizers, and
iv.) amine oxide stabilizers.

The polyester or polyamide of component (a) is 95-99.99 % by weight and the stabilizer or stabilizers of component (b), in total, are 5 to 0.01 % by weight, based on the total weight of (a) and (b).

For instance, component (a) is 98-99.99 % by weight and component (b) is 2 to 0.01 % by weight of the total of (a) and (b); for example component (a) is 99 to 99.97 % by weight and component (b) is 1 to 0.03 % by weight, based on the total weight of (a) and (b).

The additives of component (b) may be added to the polyester or polyamide of component (a) by known techniques. For example, the additives of component (b) may be added neat or as a solution or dispersion, with or without subsequent evaporation of the solvent. Component (b) may also be added to the polyester or polyamide to be stabilized in the form of a masterbatch which contains component (b) in a concentration of, for example, about 2.5 % to about 25 % by weight.

The polyester of component (a) has dicarboxylic acid repeat units selected from the group consisting of aromatic dicarboxylic acids having 8 to 14 carbon atoms, aliphatic dicarboxylic acids having 4 to 12 carbon atoms, cycloaliphatic dicarboxylic acids having 8 to 12 carbon atoms, and mixtures thereof.

For instance such diacids are terephthalic acid, isophthalic acid, o-phthalic acid, naphthalene dicarboxylic acid, cyclohexane dicarboxylic acid, cyclohexanediacetic acid, diphenyl-4,4'-dicarboxylic acid, succinic acid, maleic acid, glutaric acid, adipic acid, sebacic acid and mixtures thereof.

For example diacids are terephthalic acid, isophthalic acid or 2,6-naphthalene dicarboxylic acid.

The diol or glycol portion of the polyester of component (a) are derived from the generic formula HO-R-OH where R is an aliphatic, cycloaliphatic or aromatic moiety of 2 to 18 carbon atoms.

For example such diols or glycols are ethylene glycol, diethylene glycol, triethylene glycol, propane-1,3-diol, propane-1,2-diol, butane-1,4-diol, pentane-1,5-diol, hexane-1,6-diol, 1,4-cyclohexanedimethanol, 3-methylpentane-2,4-diol, 2-methylpentane-1,4-diol, 2,2-diethylpropane-1,3-diol, 1,4-di-(hydroxyethoxy)benzene, 2,2-bis(4-hydroxycyclohexyl)-propane, 2,4-dihydroxy-1,1,3,3-tetramethylcyclobutane, 2,2-bis-(3-hydroxyethoxyphenyl)propane, 2,2-bis-(4-hydroxypropoxyphenyl)ethane and mixtures thereof.

The diol is for example ethylene glycol or 1,4-cyclohexanedimethanol.

The polyester of component (a) is for example poly(ethylene terephthalate) PET or poly-(ethylene 2,6-naphthalene-2,6-dicarboxylate); or instance poly(ethylene terephthalate).

It is also contemplated that the polyester of component (a) can also be a blend of polyesters or copolyesters including components mentioned above.

The polyamides of the present invention are for instance those prepared by the polymerization of a monoamino-monocarboxylic acid or a lactam thereof having at least 2 carbon atoms between the amino and carboxylic acid group, of substantially equimolar proportions of a diamine which contains at least 2 carbon atoms between the amino groups and a dicarboxylic acid, or of a monoaminocarboxylic acid or a lactam thereof as defined above together with substantially equimolar proportions of a diamine and a dicarboxylic acid. The term "substantially equimolar" proportions includes both strictly equimolar proportions and slight departures therefrom which are involved in conventional techniques for stabilizing the viscosity of the resultant polyamides. The dicarboxylic acid may be used in the form of a functional derivative thereof, for example, an ester or acid chloride.

Examples of the aforementioned monoamino-monocarboxylic acids or lactams thereof which are useful in preparing the polyamides include those compounds containing from 2 to 16 carbon atoms between the amino and carboxylic acid groups, said carbon atoms forming a ring containing the -CO-NH- group in the case of a lactam. As particular examples of aminocarboxylic acids and lactams there may be mentioned ε-aminocaproic acid, butyrolactam, pivalolactam, ε-caprolactam, capryllactam, enantholactam, undecanolactam, dodecanolactam and 3- and 4-aminobenzoic acids.

Diamines suitable for use in the preparation of the polyamides include the straight chain and branched chain alkyl, aryl and alkaryl diamines. Illustrative diamines are trimethylenediamine, tetramethylenediamine, pentamethylenediamine, octamethylenediamine, hexamethylenediamine, trimethylhexamethylenediamine, m-phenylenediamine and m-xylylenediamine.

The dicarboxylic acids may be represented by the formula HOOC-B-COOH, wherein B is a divalent aliphatic or aromatic group containing at least 2 carbon atoms. Examples of aliphatic acids are sebacic acid, octadecanedioic acid, suberic acid, glutaric acid, pimelic acid and adipic acid.

Both crystalline and amorphous polyamides may be employed, with the crystalline species known for their solvent resistance. Typical examples of the polyamides or nylons, as these are often called, include, for example, polyamide-6 (polycaprolactam), 6,6 (polyhexamethylene adipamide), 11; 12; 4,6; 6,10 and 6,12 as well as polyamides from terephthalic acid and/or isophthalic acid and trimethylhexamethylenediamine; from adipic acid and m-xylylenediamines; from adipic acid, azelaic acid and 2,2-bis(p-aminophenyl)propane or 2,2-bis-(p-aminocyclohexyl)propane and from terephthalic acid and 4,4'-diaminodicyclohexylmethane. Mixtures and/or copolymers of two or more of the foregoing polyamides or prepolymers thereof, respectively, are also within the scope of the present invention. Polyamides of the present invention are for instance polyamide-6; 4; 6; 6,6; 6,4; 6,9; 6,10; 6,12; 11 and 12. For example, the polyamide of the present invention is polyamide-4, polyamide-6, polyamide-6,6, polamide-12 or polyamide-6,4.

The polyamides of the present invention may also include known polyamide stabilizers, for example Irgafos 168 (RTM) (Ciba SC), Irganox 1098 (RTM) (Ciba SC), Nylostab S-EED (RTM) (Clariant, CAS# 42774-15-2) and Polyad 201 (RTM) (Cul/KI/Zn stearate; weight ratio 10%/80%/10%). Irganox 1098 (RTM) (Ciba SC) is N,N'-bis(3,5-di-tert-butyl-4-hydroxyphenylpropionyl)hexamethylenediamide. The polyamide stabilizers are employed at their known levels, for example from about 0.01 to about 1% by weight, based on polyamide.

The polyamide compositions of the present invention exhibit improved resistance to yellowing and improved mechanical properties.

It is contemplated that the polymer of component (a) can be virgin polymer or alternatively polymer recyclate. Additionally, it is possible to add the stabilizer or stabilizers described for component (b) as part of a concentrate with a polyester or a polyamide carrier resin.

The polyesters or polyamides provided by this invention are useful in the manufacture of containers or packages for comestibles such as beverages and food. Articles molded from these polyesters or polyamides exhibit good thin-wall rigidity, excellent clarity and good barrier properties with respect to moisture and atmospheric gases, particularly carbon dioxide and oxygen. Of special interest are fibers, films or molded articles.

The plastic containers and films of the present invention are rigid or flexible mono- and/or multi-layered constructions. Typical multi-layer constructions have two or more layer laminates, manufactured either by thermoforming, or extrusion of multi-layer flexible films, or extrusion of bottle "preforms" or "parissons" followed by subsequent blow molding of the preforms into bottles. In a multi-layer system, layers of any suitable plastic may be employed.

Multi-layered containers and films of this invention may for example, be formed from layers of polyesters, polyamides, polyolefins, polyolefin copolymers such as ethylene-vinyl acetate, polystyrene, poly(vinyl chloride), poly(vinylidene chloride), polyamides, cellulosics, polycarbonates, ethylene-vinyl alcohol, poly(vinyl alcohol), styrene-acrylonitrile and ionomers, with the proviso that at least one layer comprises a polyester or polyamide composition of the present invention.

For both films and rigid packaging (bottles), typically the exterior layer, and innermost layer contacting the contents, are composed, for example, of polyesters such as PET or PEN [poly(ethylene naphthalate)], polypropylene, or polyethylene such as HDPE. The middle layers, often called 'barrier' or 'adhesive' or 'tie' layers, are composed of one or more combinations of either PET, PEN, carboxylated polyethylene ionomer such as Surlyn (RTM), vinyl alcohol homopolymers or copolymers such as poly(vinyl alcohol), partially hydrolyzed poly-(vinyl acetate), poly(ethylene-co-vinyl alcohol) such as EVOH or EVAL, nylons or polyamides such as Selar® (DuPont) or polyamides based on metaxylenediamine (sometimes called nylon MXD-6), or polyvinylidene chloride (PVDC), or polyurethanes.

Accordingly, the present invention also pertains to a process for preventing the formation of aldehydic contaminants during melt processing of (a) a mono- or multi-layered polyester or polyamide container or film comprising at least one layer which comprises incorporating into said material (b) an effective stabilizing amount of a compound selected from the group consisting of
i.) hydroxylamine stabilizers,
ii.) O-substituted hydroxylamine stabilizers
iii.) nitrone stabilizers, and
iv.) amine oxide stabilizers.

Rigid containers may be manufactured by known mechanical processes:
a) Single-stage blow molding such as performed on Nissei, Aoki, or Uniloy machines,
b) Two-stage, injection molding of pre-forms such as on Netstal or Husky machines, and pre-forms converted to bottles by blow molding (e.g., on Sidel, Corpoplast and Krones machines),
c) Integrated blow molding of pre-forms to bottles, such as processes conducted on Sipa, Krupp Kautex, or Husky ISB machines, and
d) Stretch blow molding (SBM) of pre-forms to bottles.

Preferably, the plastic container is a rigid bottle.

The pre-forms may be mono-layer or multi-layer in construction. The bottles may optionally be post-treated to alter the inner wall properties. Bottles may optionally be surface treated on the exterior such as by application of surface coatings. UV absorbers and other known stabilizers may be present in such added surface coatings.

By the use of known heat-setting techniques, certain of the polyesters are, in terms of color, I.V. and heat distortion, stable at temperatures up to about 100°C. Such stability characterristics are referred to herein as "hot-fill" stability. The linear polyesters most employed in articles having "hot-fill" stability comprise poly(ethylene terephthalate), poly(ethylene terephthalate) wherein up to 5 mole percent of the ethylene glycol residues have been replaced with residues derived from 1,4-cyclohexanedimethanol and poly(ethylene 2,6-naphthalenedicarboxylate), wherein the polyesters have been sufficiently heat set and oriented by methods well known in the art to give a desired degree of crystallinity.

The polyester or polyamide fibers of the present invention are prepared by known techniques. They may be woven or nonwoven. They are prepared by melt extrusion processes to form fibers or filaments. In accordance with known technology such as continuous filament spinning for yarn or staple fiber, and nonwoven processes such as spunbond production and meltblown production, the fibers or filaments are formed by extrusion of the molten polymer through small orifices. In general, the fibers or filaments thus formed are then drawn or elongated. In nonwoven processes such as spunbonding and meltblowing, the fibers or filaments are directly deposited onto a foraminous surface, such as a moving flat conveyor and are at least partially consolidated by any of a variety of means including, but not limited to, thermal, mechanical or chemical methods of bonding. It is known to those skilled in the art to combine processes or the fabrics from different processes to produce composite fabrics which possess certain desirable characteristics. Examples of this are combining spunbond and meltblown to produce a laminate fabric that is best known as SMS, meant to represent two outer layers of spunbond fabric and an inner layer of meltblown fabric. Additionally either or both of these processes may be combined in any arrangement with a staple fiber carding process or bonded fabrics resulting from a nonwoven staple fiber carding process. In such described laminate fabrics, the layers are generally at least partially consolidated by one of the means listed above.

In laminate fabrics of the present invention, at least one layer comprises a composition of the present invention.

Fibers of the present of the present invention are for example described in U.S. 5,650,509; U.S. 5,911,902; U.S. 6,294,254; U.S 5,049,447; U.S. 5,512,340; U.S. 6,010,789; U.S. 5,589,530 and U.S. 6,020,421.

Fibers of the present invention may be employed for example in upholstery, clothing, garments, ropes, nets, tire cords, kites, parachutes and the like.

Molded polyamide articles are for example employed in automotive applications (under the hood), and the like.

Polyester films are well known in the art. PET films are employed for packaging for example for medical, food, industrial and decorative products. They are used as business graphics films in labels, printing base, office graphics and signs. They are used as industrial films for example in liners, as carrier, tape backing, protective overlay, membrane switch and for laminating. They are used for example as imaging films in medial and proofing applications and as solar control and security window films. They are used for example in white coated film, white voided film, dimensionally stable film, extrusion coated film, tear resistant film, polarizing film, reflective film, dispensable film, coated film, co-extruded film, insulation film, weather resistant film, laminating film and mirror film.

PEN films are used for example in labels, flexible printed circuitry and electrical insulation.

The polyester films of this invention may be used for example, in combination with other films such as polyolefin films.

Polyamide films, for example PA 6 and PA 6,6 films, are used for example in co-extruded films for packaging. For example, polyamide films are employed in microwaveable food packaging.

A preferred embodiment of the present invention is therefore the use of component (b) for preventing the formation of aldehydic contaminants during melt processing of a polyester or a polyamide.

Hydroxylamine stabilizers of component i.) are for example those disclosed in U.S. Patents 4,590,231; 4,612,393; 4,649,221; 4,668,721; 4,691,015; 4,696,964; 4,703,073; 4,720,517; 4,757,102; 4,782,105; 4,831,134; 4,876,300; 5,006,577; 5,019,285; 5,064,883; 5,185,448 and 5,235,056.

The hydroxylamine stabilizers of component i.) employed in the novel process are for example compounds of the formula I 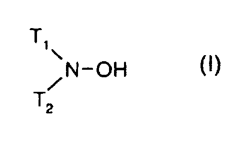 wherein
T₁ is straight or branched chain alkyl of 1 to 36 carbon atoms, cycloalkyl of 5 to 12 carbon atoms, aralkyl of 7 to 9 carbon atoms, or said aralkyl substituted by one or two alkyl of 1 to 12 carbon atoms or by one or two halogen atoms; and
T₂ is hydrogen, or independently has the same meaning as T₁.

Alternatively, the hydroxylamine stabilizers of component i.) of the present invention are compounds that contain one or more of the groups of the formula II 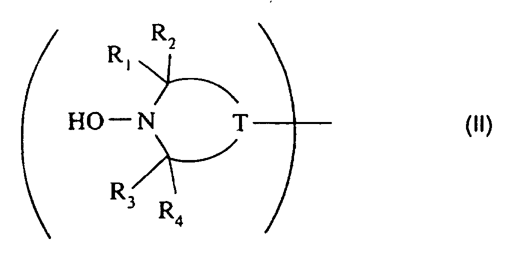 wherein
T is a group forming a five- or six-membered ring; and
R₁, R₂, R₃ and R₄ are independently hydrogen, alkyl of 1 to 4 carbon atoms or phenyl.

In the present invention the compounds of component i.) are, for example, N,N-dihydrocarbylhydroxylamines of the formula I wherein T₁ and T₂ are independently benzyl, methyl, ethyl, octyl, lauryl, dodecyl, tetradecyl, hexadecyl, heptadecyl or octadecyl, or wherein T₁ and T₂ are each the alkyl mixture found in hydrogenated tallow amine.

The compounds of component i.) in the present process are, for example, N,N-dihydrocarbylhydroxylamines selected from the group consisting of N,N-dibenzylhydroxylamine, N,N-diethylhydroxylamine, N,N-dioctylhydroxylamine, N,N-dilaurylhydroxylamine, N,N-didodecylhydroxylamine, N,N-ditetradecylhydroxylamine, N,N-dihexadecylhydroxylamine, N,N-dioctadecylhydroxylamine, N-hexadecyl-N-tetradecylhydroxylamine, N-hexadecyl-N-heptadecylhydroxylamine, N-hexadecyl-N-octadecylhydroxylamine, N-heptadecyl-N-octadecylhydroxylamine, N-methyl-N-octadecylhydroxylamine and N,N-di(hydrogenated tallow)hydroxylamine.

Component i.) in the present invention may be for example the N,N-di(alkyl)hydroxylamine produced by the direct oxidation of N,N-di(hydrogenated tallow)amine [Irgastab FS-042 (RTM), Ciba Specialty Chemicals Corp.).

The substituted hydroxylamine stabilizers of component ii.) are for example those described in U.S. 4,666,962; U.S. 4,666,963; U.S. 4,678,826; U.S. 4,753,972; U.S. 4,757,102; U.S. 4,760,179; U.S. 4,929,657; U.S. 5,057,563; U.S. 5,021,479; U.S. 5,045,583 or U.S. 5,185,448. Component ii.) includes the Michael addition products from the reaction of the hydroxylamines of component i.) with any α,β-unsaturated ketone, ester, amide, or phosphonate. Component ii.) also includes Mannich-type condensation products from the reaction of the hydroxylamines of component i.) with formaldehyde and secondary amines. Component ii.) also includes O-alkenyl substituted analogues of the present hydroxylamines of component i.) as disclosed in U.S. 5,045,583. Component ii.) also includes non-hindered substituted hydroxylamine stabilizers as disclosed in U.S. Pat. No. 5,185,448. Component ii.) also includes acyl derivatives of the hydroxylamine stabilizers of component i.), for example such as those disclosed in U.S. 5,021,479.

The substituted hydroxylamines of component ii.) may be derivatives of the above-described hydroxylamines of formulae I or II, provided that if they are derivatives of hydroxylamines of formula II, that they are limited to derivatives of hydroxylamines as described in U.S. 5,185,448 and 5,235,056.

The present substituted hydroxylamines may be for example compounds of the formula III or IV 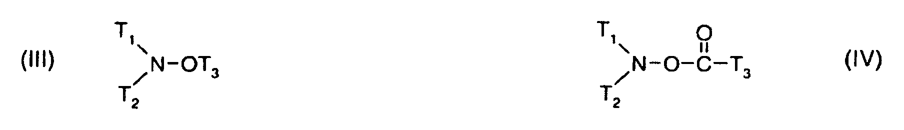 wherein
T₁ is straight or branched chain alkyl of 1 to 36 carbon atoms, cycloalkyl of 5 to 12 carbon atoms, aralkyl of 7 to 9 carbon atoms, or said aralkyl substituted by one or two alkyl of 1 to 12 carbon atoms or by one or two halogen atoms;
T₂ is hydrogen, or independently has the same meaning as T₁; and
T₃ is allyl, straight or branched chain alkyl of 1 to 36 carbon atoms, cycloalkyl of 5 to 18 carbon atoms, cycloalkenyl of 5 to 18 carbon atoms or a straight or branched chain alkyl of 1 to 4 carbon atoms substituted by phenyl or by phenyl substituted by one or two alkyl groups of 1 to 4 carbon atoms or by 1 or 2 halogen atoms.

The substituted hydroxylamines of component ii.) may be for example O-allyl-N,N-dioctadecylhydroxylamine or O-n-propyl-N,N-dioctadecylhydroxylamine or N,N-di(hydrogenated tallow)acetoxyamine.

The nitrones of component iii.) may be for example as described in U.S. 4,898,901.

The nitrones of component iii.) are for example of the formula V 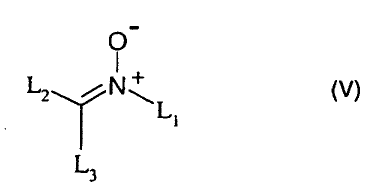 wherein
L₁ is straight or branched chain alkyl of 1 to 36 carbon atoms, cycloalkyl of 5 to 12 carbon atoms, aralkyl of 7 to 9 carbon atoms, or said aralkyl substituted by one or two alkyl of 1 to 12 carbon atoms or by one or two halogen atoms; and
L₂ and L₃ are independently hydrogen, straight or branched chain alkyl of 1 to 36 carbon atoms, cycloalkyl of 5 to 12 carbon atoms, aralkyl of 7 to 9 carbon atoms, or said aralkyl substituted by one or two alkyl of 1 to 12 carbon atoms or by one or two halogen atoms; or L₁ and L₂ together form a five- or six-membered ring including the nitrogen atom.

The nitrones of component iii.) may be the corresponding oxidation products of the hydroxylamines of component i.). That is to say, the nitrones of component iii.) may be nitrone analogues of the hydroxylamines of component i.). The nitrones may be for example, N-benzyl-α-phenylnitrone, N-ethyl-α-methylnitrone, N-octyl-α-heptylnitrone, N-lauryl-α-undecylnitrone, N-tetradecyl-α-tridcylnitrone, N-hexadecyl-α-pentadecylnitrone, N-octadecyl-α-heptadecylnitrone, N-hexadecyl-α-heptadecylnitrone, N-ocatadecyl-α-pentadecylnitrone, N-heptadecyl-α-heptadecylnitrone, N-octadecyl-α-hexadecyinitrone, N-methyl-α-heptadecylnitrone and the nitrone derived from N,N-di(hydrogenated tallow)hydroxylamine.

The amine oxide stabilizers of component iv.) are for example those disclosed in U.S. 5,081,300; U.S. 5,162,408; U.S. 5,844,029; U.S. 5,880,191 and U.S. 5,922,794.

The amine oxide stabilizers of component iv.) are for example saturated tertiary amine oxides as represented by general formula VI: 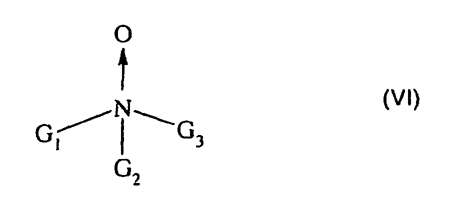 wherein
G₁ and G₂ are independently a straight or branched chain alkyl of 6 to 36 carbon atoms, aryl of 6 to 12 carbon atoms, aralkyl of 7 to 36 carbon atoms, alkaryl of 7 to 36 carbon atoms, cycloalkyl of 5 to 36 carbon atoms, alkcycloalkyl of 6 to 36 carbon atoms or cycloalkylalkyl of 6 to 36 carbon atoms;
G₃ is a straight or branched chain alkyl of 1 to 36 carbon atoms, aryl of 6 to 12 carbon atoms, aralkyl of 7 to 36 carbon atoms, alkaryl of 7 to 36 carbon atoms, cycloalkyl of 5 to 36 carbon atoms, alkcycloalkyl of 6 to 36 carbon atoms or cycloalkylalkyl of 6 to 36 carbon atoms; with the proviso that at least one of G₁,G₂ and G₃ contains a β carbon-hydrogen bond; and wherein said aryl groups may be substituted by one to three halogen, alkyl of 1 to 8 carbon atoms, alkoxy of 1 to 8 carbon atoms or combinations thereof; and wherein said alkyl, aralkyl, alkaryl, cycloalkyl, alkcycloalkyl and cycloalkylalkyl groups may be interrupted by one to sixteen -O-, -S-, -SO-, -SO₂-, -COO-, -OCO-, -CO-, -NG₄-, -CONG₄- and -NG₄CO-groups, or wherein said alkyl, aralkyl, alkaryl, cycloalkyl, alkcycloalkyl and cycloalkylalkyl groups may be substituted by one to sixteen groups selected from -OG₄, -SG₄, -COOG₄, -OCOG₄, -COG₄, -N(G₄)₂, -CON(G₄)₂, -NG₄COG₄ and 5- and 6-membered rings containing the -C(CH₃)(CH₂Rₓ)NL(CH₂Rₓ)(CH₃)C- group or wherein said alkyl, aralkyl, alkaryl, cycloalkyl, alkcycloalkyl and cycloalkylalkyl groups are both interrupted and substituted by the groups mentioned above; and
wherein
G₄ is independently hydrogen or alkyl of 1 to 8 carbon atoms;
Rₓ is hydrogen or methyl;
L is hydrogen, hydroxy, C₁₋₃₀ straight or branched chain alkyl moiety, a -C(O)R moiety where R is a C₁₋₃₀ straight or branched chain alkyl group, or a -OR_{y} moiety; and
R_{y} is C₁₋₃₀ straight or branched chain alkyl, C₂-C₃₀ alkenyl, C₂-C₃₀ alkynyl, C₅-C₁₂ cycloalkyl, C₆-C₁₀ bicycloalkyl, C₅-C₈ cycloalkenyl, C₆-C₁₀ aryl, C₇-C₉ aralkyl, C₇-C₉ aralkyl substituted by alkyl or aryl, or -CO(D), where D is C₁-C₁₈ alkyl, C₁-C₁₈ alkoxy, phenyl, phenyl substituted by hydroxy, alkyl or alkoxy, or amino or amino mono- or di-substituted by alkyl or phenyl.

Examples of compounds of the formula VI are those where G₁ and G₂ are independently benzyl or substituted benzyl. It is also possible for each of G₁, G₂, and G₃ to be the same residue. G₁ and G₂ may also independently be alkyl groups of 8 to 26 carbon atoms, for example alkyl groups of 10 to 26 carbon atoms. G₃ may be an alkyl group of 1 to 22 carbon atoms, for example methyl or substituted methyl. Also, the present amine oxides include those wherein G₁, G₂, and G₃ are the same alkyl groups of 6 to 36 carbon atoms. The aforementioned residues for G₁, G₂, and G₃ are, for instance, saturated hydrocarbon residues or saturated hydrocarbon residues containing at least one of the aforementioned -O-, -S-, -SO-, -CO₂-, -CO-, or -CON- moieties. Those skilled in the art will be able to envision other useful residues for each of G₁, G₂, and G₃ without detracting from the present invention.

Of interest are amine oxide stabilizers of formula VI in which G₁ and G₂ are independently alkyl groups of 8 to 26 carbon atoms and G₃ is methyl.

The saturated amine oxides of component iv.) may also includes poly(amine oxides). By poly(amine oxides) is meant tertiary amine oxides containing at least two tertiary amine oxides per molecule. Illustrative poly(amine oxides), also called "poly(tertiary amine oxides)", include the tertiary amine oxide analogues of aliphatic and alicyclic diamines such as, for example, 1,4-diaminobutane; 1,6-diaminohexane; 1,10-diaminodecane; and 1,4-diaminocyclohexane, and aromatic based diamines such as, for example, diamino anthraquinones and diaminoanisoles.

Also included as component iv.) are tertiary amine oxides derived from oligomers and polymers of the aforementioned diamines. Useful amine oxides also include amine oxides attached to polymers, for example, polyolefins, polyacrylates, polyesters, polyamides, polystyrenes, and the like. When the amine oxide is attached to a polymer, the average number of amine oxides per polymer can vary widely as not all polymer chains need to contain an amine oxide. All of the aforementioned amine oxides may optionally contain at least one -O-, -S-, -SO-, -CO₂-, -CO- or -CONG₄- moiety. For instance, each tertiary amine oxide of the polymeric tertiary amine oxide may contain a C₁ residue.

The groups G₁, G₂ and G₃ in the compounds of the formula VI may be attached to a molecule containing a hindered amine. Hindered amines are known in the art and the amine oxide of the present invention may be attached to the hindered amine in any manner and structural position of the hindered amine. Useful hindered amines when part of a compound of component iv.) include those of the general formulas VII and VIII: 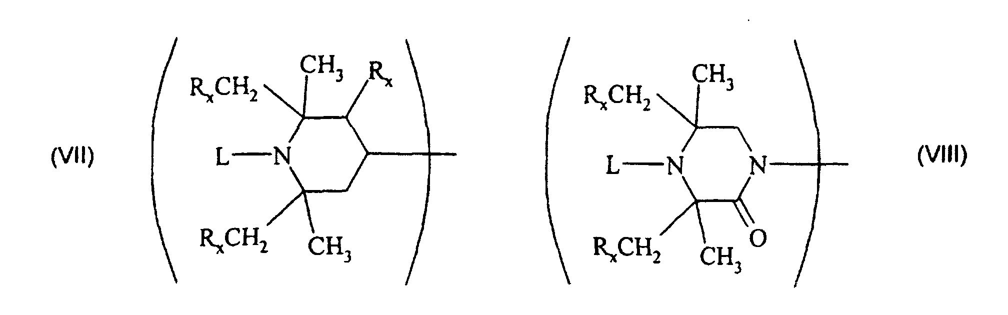 wherein L and Rₓ are as described above. Also included are amine oxides containing more than one hindered amine and more than one saturated amine oxide per molecule. The hindered amine may be attached to a poly(tertiary amine oxide) or attached to a polymeric substrate, as discussed above.

Specific examples of component (b) are one or more compounds selected from
i.) an N,N-di(alkyl)hydroxylamine produced by the direct oxidation of N,N-di(hydrogennated tallow)amine [Irgastab FS-042 (RTM)],
ii.) O-allyl-N,N-dioctadecylhydroxylamine,
iii.) N-octadecyl-α-heptadecylnitrone, and
iv.) Genox EP (RTM), a di(C₁₆-C₁₈)alkyl methyl amine oxide, CAS# 204933-93-7.

Irgastab FS-042 (RTM) is available from Ciba Specialty Chemicals. Genox EP (RTM) is available from GE Chemicals. O-allyl-N,N-dioctadecylhydroxylamine is as prepared in Example 3 of U.S. 5,045,583. N-octadecyl-α-heptadecylnitrone is as prepared in Example 3 of U.S. 4,898,901.

The instant invention also pertains to a process for forming a bottle preform or a bottle or container suitable for storing water (mineral, natural, ozonated) or other foodstuffs, which allows the desirable taste of the water or foodstuff after packaging to remain unaltered after being placed in said bottle or container prepared from the polyester or polyamide composition of the instant invention.

The instant plastic container or film stabilized by a compound or compounds of component (b) may also optionally have incorporated therein or applied thereto from about 0.01 to about 10 % by weight; for instance from about 0.025 to about 5 % by weight, for example from about 0.1 to about 3 % by weight, based on the total weight of the composition, of additional coadditives such as antioxidants, other UV absorbers, hindered amines, phosphites or phosphonites, benzofuran-2-ones, thiosynergists, polyamide stabilizers, metal stearates, nucleating agents, fillers, reinforcing agents, lubricants, emulsifiers, dyes, pigments, optical brighteners, flame retardants, antistatic agents, blowing agents and the like, such as the materials listed below, or mixtures thereof.

### 1. Antioxidants

1.1. Alkylated monophenols, for example 2,6-di-tert-butyl-4-methylphenol, 2-tert-butyl-4,6-dimethylphenol, 2,6-di-tert-butyl-4-ethylphenol, 2,6-di-tert-butyl-4-n-butylphenol, 2,6-di-tert-butyl-4-isobutylphenol, 2,6-dicyclopentyl-4-methylphenol, 2-(α-methylcyclohexyl)-4,6-dimethylphenol, 2,6-dioctadecyl-4-methylphenol, 2,4,6-tricyclohexylphenol, 2,6-di-tert-butyl-4-methoxymethylphenol, nonylphenols which are linear or branched in the side chains, for example 2,6-di-nonyl-4-methylphenol, 2,4-dimethyl-6-(1'-methylundec-1'-yl)phenol, 2,4-dimethyl-6-(1'-methylheptadec-1'-yl)phenol, 2,4-dimethyl-6-(1'-methyltridec-1'-yl)phenol and mixtures thereof.

1.2. Alkylthiomethylphenols, for example 2,4-dioctylthiomethyl-6-tert-butylphenol, 2,4-dioctylthiomethyl-6-methylphenol, 2,4-dioctylthiomethyl-6-ethylphenol, 2,6-di-dodecylthiomethyl-4-nonylphenol.

1.3. Hydroquinones and alkylated hydroquinones, for example 2,6-di-tert-butyl-4-methoxyphenol, 2,5-di-tert-butylhydroquinone, 2,5-di-tert-amylhydroquinone, 2,6-diphenyl-4-octadecyloxyphenol, 2,6-di-tert-butylhydroquinone, 2,5-di-tert-butyl-4-hydroxyanisole, 3,5-di-tert-butyl-4-hydroxyanisole, 3,5-di-tert-butyl-4-hydroxyphenyl stearate, bis(3,5-di-tert-butyl-4-hydroxyphenyl) adipate.

1.4. Tocopherols, for example α-tocopherol, β-tocopherol, γ-tocopherol, δ-tocopherol and mixtures thereof (vitamin E).

1.5. Hydroxylated thiodiphenyl ethers, for example 2,2'-thiobis(6-tert-butyl-4-methylphenol), 2,2'-thiobis(4-octylphenol), 4,4'-thiobis(6-tert-butyl-3-methylphenol), 4,4'-thiobis(6-tert-butyl-2-methylphenol), 4,4'-thiobis(3,6-di-sec-amylphenol), 4,4'-bis(2,6-dimethyl-4-hydroxyphenyl)-disulfide.

1.6. Alkylidenebisphenols, for example 2,2'-methylenebis(6-tert-butyl-4-methylphenol), 2,2'-methylenebis(6-tert-butyl-4-ethylphenol), 2,2'-methylenebis[4-methyl-6-(α-methylcyclohexyl)-phenol], 2,2'-methylenebis(4-methyl-6-cyclohexylphenol), 2,2'-methylenebis(6-nonyl-4-methylphenol), 2,2'-methylenebis(4,6-di-tert-butylphenol), 2,2'-ethylidenebis(4,6-di-tert-butylphenol), 2,2'-ethylidenebis(6-tert-butyl-4-isobutylphenol), 2,2'-methylenebis[6-(α-methylbenzyl)-4-nonylphenol], 2,2'-methylenebis[6-(α,α-dimethylbenzyl)-4-nonylphenol], 4,4'-methylenebis(2,6-di-tert-butylphenol), 4,4'-methylenebis(6-tert-butyl-2-methylphenol), 1,1-bis(5-tert-butyl-4-hydroxy-2-methylphenyl)butane, 2,6-bis(3-tert-butyl-5-methyl-2-hydroxybenzyl)-4-methylphenol, 1,1,3-tris(5-tert-butyl-4-hydroxy-2-methylphenyl)butane, 1,1-bis(5-tert-butyl-4-hydroxy-2-methylphenyl)-3-n-dodecylmercaptobutane, ethylene glycol bis[3,3-bis(3'-tert-butyl-4'-hydroxyphenyl)butyrate], bis(3-tert-butyl-4-hydroxy-5-methyl-phenyl)dicyclopentadiene, bis[2-(3'-tert-butyl-2'-hydroxy-5'-methylbenzyl)-6-tert-butyl-4-methylphenyl]terephthalate, 1,1-bis-(3,5-dimethyl-2-hydroxyphenyl)butane, 2,2-bis(3,5-di-tert-butyl-4-hydroxyphenyl)propane, 2,2-bis-(5-tert-butyl-4-hydroxy2-methylphenyl)-4-n-dodecylmercaptobutane, 1,1,5,5-tetra(5-tert-butyl-4-hydroxy-2-methylphenyl)pentane.

1.7. O-, N- and S-benzyl compounds, for example 3,5,3',5'-tetra-tert-butyl-4,4'-dihydroxydibenzyl ether, octadecyl-4-hydroxy-3,5-dimethylbenzylmercaptoacetate, tridecyl-4-hydroxy-3,5-di-tert-butylbenzylmercaptoacetate, tris(3,5-di-tert-butyl-4-hydroxybenzyl)amine, bis(4-tert-butyl-3-hydroxy-2,6-dimethylbenzyl)dithioterephthalate, bis(3,5-di-tert-butyl-4-hydroxybenzyl)sulfide, isooctyl-3,5-di-tert-butyl-4-hydroxybenzylmercaptoacetate.

1.8. Hydroxybenzylated malonates, for example dioctadecyl-2,2-bis(3,5-di-tert-butyl-2-hydroxybenzyl)malonate, di-octadecyl-2-(3-tert-butyl-4-hydroxy-5-methylbenzyl)malonate, di-dodecylmercaptoethyl-2,2-bis(3,5-di-tert-butyl-4-hydroxybenzyl)malonate, bis[4-(1,1,3,3-tetramethylbutyl)phenyl]-2,2-bis(3,5-di-tert-butyl-4-hydroxybenzyl)malonate.

1.9. Aromatic hydroxybenzyl compounds, for example 1,3,5-tris(3,5-di-tert-butyl-4-hydroxybenzyl)-2,4,6-trimethylbenzene, 1,4-bis(3,5-di-tert-butyl-4-hydroxybenzyl)-2,3,5,6-tetramethylbenzene, 2,4,6-tris(3,5-di-tert-butyl-4-hydroxybenzyl)phenol.

1.10. Triazine compounds, for example 2,4-bis(octylmercapto)-6-(3,5-di-tert-butyl-4-hydroxyanilino)-1,3,5-triazine, 2-octylmercapto-4,6-bis(3,5-di-tert-butyl-4-hydroxyanilino)-1,3,5-triazine, 2-octylmercapto-4,6-bis(3,5-di-tert-butyl-4-hydroxyphenoxy)-1,3,5-triazine, 2,4,6-tris-(3,5-di-tert-butyl-4-hydroxyphenoxy)-1,2,3-triazine, 1,3,5-tris(3,5-di-tert-butyl-4-hydroxybenzyl)isocyanurate, 1,3,5-tris(4-tert-butyl-3-hydroxy-2,6-dimethylbenzyl)isocyanurate, 2,4,6-tris-(3,5-di-tert-butyl-4-hydroxyphenylethyl)-1,3,5-triazine, 1,3,5-tris(3,5-di-tert-butyl-4-hydroxyphenylpropionyl)-hexahydro-1,3,5-triazine, 1,3,5-tris(3,5-dicyclohexyl-4-hydroxybenzyl)isocyanurate.

1.11. Benzylphosphonates, for example dimethyl-2,5-di-tert-butyl-4-hydroxybenzylphosphonate, diethyl-3,5-di-tert-butyl-4-hydroxybenzylphosphonate, dioctadecyl-3,5-di-tert-butyl-4-hydroxybenzylphosphonate, dioctadecyl-5-tert-butyl-4-hydroxy-3-methylbenzylphosphonate, the calcium salt of the monoethyl ester of 3,5-di-tert-butyl-4-hydroxybenzylphosphonic acid.

1.12. Acylaminophenols, for example 4-hydroxylauranilide, 4-hydroxystearanilide, octyl N-(3,5-di-tert-butyl-4-hydroxyphenyl)carbamate.

1.13. Esters of β-(3,5-di-tert-butyl-4-hyxyphenyl)propionic acid with mono- or polyhydric alcohols, e.g. with methanol, ethanol, n-octanol, i-octanol, octadecanol, 1,6-hexanediol, 1,9-nonanediol, ethylene glycol, 1,2-propanediol, neopentyl glycol, thiodiethylene glycol, diethylene glycol, triethylene glycol, pentaerythritol, tris(hydroxyethyl)isocyanurate, N,N'-bis(hydroxyethyl)oxamide, 3-thiaundecanol, 3-thiapentadecanol, trimethylhexanediol, trimethylolpropane, 4-hydroxymethyl-1-phospha-2,6,7-trioxabicyclo[2.2.2]octane.

1.14. Esters of β-(5-tert-butyl-4-hydroxy-3-methylphenyl)propionic acid with mono- or polyhydric alcohols, e.g. with methanol, ethanol, n-octanol, i-octanol, octadecanol, 1,6-hexanediol, 1,9-nonanediol, ethylene glycol, 1,2-propanediol, neopentyl glycol, thiodiethylene glycol, diethylene glycol, triethylene glycol, pentaerythritol, tris(hydroxyethyl)isocyanurate, N,N'-bis-(hydroxyethyl)oxamide, 3-thiaundecanol, 3-thiapentadecanol, trimethylhexanediol, trimethylolpropane, 4-hydroxymethyl-1-phospha-2,6,7-trioxabicyclo[2.2.2]octane; 3,9-bis[2-{3-(3-tert-butyl-4-hydroxy-5-methylphenyl)propionyloxy}-1,1-dimethylethyl]-2,4,8,10-tetraoxaspiro[5.5]-undecane.

1.15. Esters of β-(3,5-dicyclohexyl-4-hydroxyphenyl)propionic acid with mono- or polyhydric alcohols, e.g. with methanol, ethanol, octanol, octadecanol, 1,6-hexanediol, 1,9-nonanediol, ethylene glycol, 1,2-propanediol, neopentyl glycol, thiodiethylene glycol, diethylene glycol, triethylene glycol, pentaerythritol, tris(hydroxyethyl)isocyanurate, N,N'-bis(hydroxyethyl)oxamide, 3-thiaundecanol, 3-thiapentadecanol, trimethylhexanediol, trimethylolpropane, 4-hydroxymethyl-1-phospha-2,6,7-trioxabicyclo[2.2.2]octane.

1.16. Esters of 3,5-di-tert-butyl-4-hydroxyphenyl acetic acid with mono- or polyhydric alcohols, e.g. with methanol, ethanol, octanol, octadecanol, 1,6-hexanediol, 1,9-nonanediol, ethylene glycol, 1,2-propanediol, neopentyl glycol, thiodiethylene glycol, diethylene glycol, triethylene glycol, pentaerythritol, tris(hydroxyethyl)isocyanurate, N,N'-bis(hydroxyethyl)oxamide, 3-thiaundecanol, 3-thiapentadecanol, trimethylhexanediol, trimethylolpropane, 4-hydroxymethyl-1-phospha-2,6,7-trioxabicyclo[2.2.2]octane.

1.17. Amides of β-(3,5-di-tert-butyl-4-hydroxyphenyl)propionic acid e.g. N,N'-bis(3,5-di-tert-butyl-4-hydroxyphenylpropionyl)hexamethylenediamide, N,N'-bis(3,5-di-tert-butyl-4-hydroxyphenylpropionyl)trimethylenediamide, N,N'-bis(3,5-di-tert-butyl-4-hydroxyphenylpropionyl)hydrazide, N,N'-bis[2-(3-[3,5-di-tert-butyl-4-hydroxyphenyl]propionyloxy)ethyl]oxamide (Naugard®XL-1, supplied by Uniroyal).

1.18. Ascorbic acid (vitamin C)

1.19. Aminic antioxidants, for example N,N'-di-isopropyl-p-phenylenediamine, N,N'-di-sec-butyl-p-phenylenediamine, N,N'-bis(1,4-dimethylpentyl)-p-phenylenediamine, N,N'-bis(1-ethyl-3-methylpentyl)-p-phenylenediamine, N,N'-bis(1-methylheptyl)-p-phenylenediamine, N,N'-dicyclohexyl-p-phenylenediamine, N,N'-diphenyl-p-phenylenediamine, N,N'-bis(2-naphthyl)-p-phenylenediamine, N-isopropyl-N'-phenyl-p-phenylenediamine, N-(1,3-dimethylbutyl)-N'-phenyl-p-phenylenediamine, N-(1-methylheptyl)-N'-phenyl-p-phenylenediamine, N-cyclohexyl-N'-phenyl-p-phenylenediamine, 4-(p-toluenesulfamoyl)diphenylamine, N,N'-dimethyl-N,N'-di-sec-butyl-p-phenylenediamine, diphenylamine, N-allyldiphenylamine, 4-iso-propoxydiphenylamine, N-phenyl-1-naphthylamine, N-(4-tert-octylphenyl)-1-naphthylamine, N-phenyl-2-naphthylamine, octylated diphenylamine, for example p,p'-di-tert-octyldiphenylamine, 4-n-butylaminophenol, 4-butyrylaminophenol, 4-nonanoylaminophenol, 4-dodecanoylaminophenol, 4-octadecanoylaminophenol, bis(4-methoxyphenyl)amine, 2,6-di-tert-butyl-4-dimethylaminomethylphenol, 2,4'-diaminodiphenylmethane, 4,4'-diaminodiphenylmethane, N,N,N',N'-tetramethyl-4,4'-diaminodiphenylmethane, 1,2-bis[(2-methylphenyl)amino]ethane, 1,2-bis(phenylamino)propane, (o-tolyl)biguanide, bis[4-(1',3'-dimethylbutyl)phenyl]amine, tert-octylated N-phenyl-1-naphthylamine, a mixture of mono- and dialkylated tert-butyl/tert-octyldiphenylamines, a mixture of mono- and dialkylated nonyldiphenylamines, a mixture of mono- and dialkylated dodecyldiphenylamines, a mixture of mono- and dialkylated isopropyl/isohexyldiphenylamines, a mixture of mono- and dialkylated tert-butyldiphenylamines, 2,3-dihydro-3,3-dimethyl-4H-1,4-benzothiazine, phenothiazine, a mixture of mono- and dialkylated tert-butyl/tert-octylphenothiazines, a mixture of mono- and dialkylated tert-octylphenothiazines, N-allylphenothiazine, N,N,N',N'-tetraphenyl-1,4-diaminobut-2-ene.

2. UV absorbers and light stabilizers

2.1. 2-(2'-Hydroxyphenyl)benzotriazoles, for example 2-(2'-hydroxy-5'-methylphenyl)benzotriazole, 2-(3',5'-di-tert-butyl-2'-hydroxyphenyl)benzotriazole, 2-(5'-tert-butyl-2'-hydroxyphenyl)benzotriazole, 2-(2'-hydroxy-5'-(1,1,3,3-tetramethylbutyl)phenyl)benzotriazole, 2-(3',5'-di-tert-butyl-2'-hydroxyphenyl)-5-chlorobenzotriazole, 2-(3'-tert-butyl-2'-hydroxy-5'-methylphenyl)-5-chlorobenzotriazole, 2-(3'-sec-butyl-5'-tert-butyl-2'-hydroxyphenyl)benzotriazole, 2-(2'-hydroxy-4'-octyloxyphenyl)benzotriazole, 2-(3',5'-di-tert-amyl-2'-hydroxyphenyl)benzotriazole, 2-(3',5'-bis(α,α-dimethylbenzyl)-2'-hydroxyphenyl)benzotriazole, 2-(3'-tert-butyl-2'-hydroxy-5'-(2-octyloxycarbonylethyl)phenyl)-5-chlorobenzotriazole, 2-(3'-tert-butyl-5'-[2-(2-ethylhexyloxy)carbonylethyl]-2'-hydroxyphenyl)-5-chlorobenzotriazole, 2-(3'-tert-butyl-2'-hydroxy-5'-(2-methoxycarbonylethyl)phenyl)-5-chlorobenzotriazole, 2-(3'-tert-butyl-2'-hydroxy-5'-(2-methoxycarbonylethyl)phenyl)benzotriazole, 2-(3'-tert-butyl-2'-hydroxy-5'-(2-octyloxycarbonylethyl)phenyl)benzotriazole, 2-(3'-tert-butyl-5'-[2-(2-ethylhexyloxy)carbonylethyl]-2'-hydroxyphenyl)benzotriazole, 2-(3'-dodecyl-2'-hydroxy-5'-methylphenyl)benzotriazole, 2-(3'-tert-butyl-2'-hydroxy-5'-(2-isooctyloxycarbonylethyl)phenylbenzotriazole, 2,2'-methylenebis[4-(1,1,3,3-tetramethylbutyl)-6-benzotriazole-2-ylphenol]; the transesterification product of 2-[3'-tert-butyl-5'-(2-methoxycarbonylethyl)-2'-hydroxyphenyl]-2H-benzotriazote with polyethylene glycol 300; 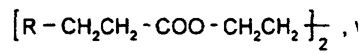 where R = 3'-tert-butyl-4'-hydroxy-5'-2H-benzotriazol-2-ylphenyl, 2-[2'-hydroxy-3'-(α,α-dimethylbenzyl)-5'-(1,1,3,3-tetramethylbutyl)phenyl]benzotriazole; 2-[2'-hydroxy-3'-(1,1,3,3-tetramethylbutyl)-5'-(α,α-dimethylbenzyl)phenyl]benzotriazole.

2.2. 2-Hydroxybenzophenones, for example the 4-hydroxy, 4-methoxy, 4-octyloxy, 4-decyloxy, 4-dodecyloxy, 4-benzyloxy, 4,2',4'-trihydroxy and 2'-hydroxy-4,4'-dimethoxy derivatives.

2.3. Esters of substituted and unsubstituted benzoic acids, for example 4-tert-butylphenyl salicylate, phenyl salicylate, octylphenyl salicylate, dibenzoyl resorcinol, bis(4-tert-butylbenzoyl)resorcinol, benzoyl resorcinol, 2,4-di-tert-butylphenyl 3,5-di-tert-butyl-4-hydroxybenzoate, hexadecyl 3,5-di-tert-butyl-4-hydroxybenzoate, octadecyl 3,5-di-tert-butyl-4-hydroxybenzoate, 2-methyl-4,6-di-tert-butylphenyl 3,5-di-tert-butyl-4-hydroxybenzoate.

2.4. Acrylates, for example ethyl α-cyano-β,β-diphenylacrylate, isooctyl α-cyano-β,β-diphenylacrylate, methyl α-carbomethoxycinnamate, methyl α-cyano-β-methyl-p-methoxycinnamate, butyl α-cyano-β-methyl-p-methoxycinnamate, methyl α-carbomethoxy-p-methoxycinnamate and N-(β-carbomethoxy-β-cyanovinyl)-2-methylindoline.

2.5. Nickel compounds, for example nickel complexes of 2,2'-thiobis[4-(1,1,3,3-tetramethylbutyl)phenol], such as the 1:1 or 1:2 complex, with or without additional ligands such as n-butylamine, triethanolamine or N-cyclohexyldiethanolamine, nickel dibutyldithiocarbamate, nickel salts of the monoalkyl esters, e.g. the methyl or ethyl ester, of 4-hydroxy-3,5-di-tert-butylbenzylphosphonic acid, nickel complexes of ketoximes, e.g. of 2-hydroxy-4-methylphenylundecylketoxime, nickel complexes of 1-phenyl-4-lauroyl-5-hydroxypyrazole, with or without additional ligands.

2.6. Sterically hindered amines, for example bis(2,2,6,6-tetramethyl-4-piperidyl)sebacate, bis(2,2,6,6-tetramethyl-4-piperidyl)succinate, bis(1,2,2,6,6-pentamethyl-4-piperidyl)sebacate, bis(1-octyloxy-2,2,6,6-tetramethyl-4-piperidyl)sebacate, bis(1,2,2,6,6-pentamethyl-4-piperidyl) n-butyl-3,5-di-tert-butyl-4-hydroxybenzylmalonate, the condensate of 1-(2-hydroxyethyl)-2,2,6,6-tetramethyl-4-hydroxypiperidine and succinic acid, linear or cyclic condensates of N,N'-bis(2,2,6,6-tetramethyl-4-piperidyl)hexamethylenediamine and 4-tert-octylamino-2,6-dichloro-1,3,5-triazine, tris(2,2,6,6-tetramethyl-4-piperidyl)nitrilotriacetate, tetrakis(2,2,6,6-tetramethyl-4-piperidyl)-1 ,2, 3,4-butanetetracarboxylate, 1,1'-(1,2-ethanediyl)-bis(3,3,5,5-tetramethylpiperazinone), 4-benzoyl-2,2,6,6-tetramethylpiperidine, 4-stearyloxy-2,2,6,6-tetramethylpiperidine, bis(1,2,2,6,6-pentamethylpiperidyl)-2-n-butyl-2-(2-hydroxy-3,5-di-tert-butylbenzyl)malonate, 3-n-octyl-7,7,9,9-tetramethyl-1,3,8-triazaspiro[4.5]decane-2,4-dione, bis(1-octyloxy-2,2,6,6-tetramethylpiperidyl)sebacate, bis(1-octyloxy-2,2,6,6-tetramethylpiperidyl)succinate, linear or cyclic condensates of N,N'-bis(2,2,6,6-tetramethyl-4-piperidyl)hexamethylenediamine and 4-morpholino-2,6-dichloro-1,3,5-triazine, the condensate of 2-chloro-4,6-bis(4-n-butylamino-2,2,6,6-tetramethylpiperidyl)-1,3,5-triazine and 1,2-bis(3-aminopropylamino)ethane, the condensate of 2-chloro-4,6-di-(4-n-butylamino-1,2,2,6,6-pentamethylpiperidyl)-1,3,5-triazine and 1,2-bis(3-aminopropylamino)ethane, 8-acetyl-3-dodecyl-7,7,9,9-tetramethyl-1,3,8-triazaspiro[4.5]decane-2,4-dione, 3-dodecyl-1-(2,2,6,6-tetramethyl-4-piperidyl)pyrrolidine-2,5-dione, 3-dodecyl-1-(1,2,2,6,6-pentamethyl-4-piperidyl)pyrrolidine-2,5-dione, a mixture of 4-hexadecyloxy- and 4-stearyloxy-2,2,6,6-tetramethylpiperidine, a condensate of N,N'-bis(2,2,6,6-tetramethyl-4-piperidyl)hexamethylenediamine and 4-cyclohexylamino-2,6-dichloro-1,3,5-triazine, a condensate of 1,2-bis(3-aminopropylamino)ethane and 2,4,6-trichloro-1,3,5-triazine as well as 4-butylamino-2,2,6,6-tetramethylpiperidine (CAS Reg. No. [136504-96-6]); a condensate of 1,6-hexanediamine and 2,4,6-trichloro-1,3,5-triazine as well as N,N-dibutylamine and 4-butylamino-2,2,6,6-tetramethylpiperidine (CAS Reg. No. [192268-64-7]); N-(2,2,6,6-tetramethyl-4-piperidyl)-n-dodecylsuccinimide, N-(1,2,2,6,6-pentamethyl-4-piperidyl)-n-dodecylsuccinimide, 2-undecyl-7,7,9,9-tetramethyl-1-oxa-3,8-diaza-4-oxo-spiro[4,5]decane, a reaction product of 7,7,9,9-tetramethyl-2-cycloundecyl-1-oxa-3,8-diaza-4-oxospiro-[4,5]decane and epichlorohydrin, 1,1-bis(1,2,2,6,6-pentamethyl-4-piperidyloxycarbonyl)-2-(4-methoxyphenyl)ethene, N,N'-bis formyl-N,N'-bis(2,2,6,6-tetramethyl-4-piperidyl)hexamethylenediamine, a diester of 4-methoxymethylenemalonic acid with 1,2,2,6,6-pentamethyl-4-hydroxypiperidine, poly[methylpropyl-3-oxy-4-(2,2,6,6-tetramethyl-4-piperidyl)]siloxane, a reaction product of maleic acid anhydride-α-olefin copolymer with 2,2,6,6-tetramethyl-4-aminopiperidine or 1,2,2,6,6-pentamethyl-4-aminopiperidine.

The sterically hindered amine may also be one of the compounds described in GB-A-2 301 106 as component I-a), I-b), I-c), I-d), I-e), I-f), I-g), I-h), I-i), I-j), I-k) or I-l), in particular the light stabilizer 1-a-1, 1-a-2, 1-b-1, 1-c-1, 1-c-2, 1-d-1, 1-d-2, 1-d-3, 1-e-1, 1-f-1, 1-g-1, 1-g-2 or 1-k-1 listed on pages 68 to 73 of said GB-A-2 301 106.

The sterically hindered amine may also be one of the compounds described in EP-A-0 782 994, for example compounds as described in claims 10 or 38 or in Examples 1-12 or D-1 to D-5 therein.

2.7. Sterically hindered amines substituted on the N-atom by a hydroxy-substituted alkoxy group, for example compounds such as 1-(2-hydroxy-2-methylpropoxy)-4-octadecanoyloxy-2,2,6,6-tetramethylpiperidine, 1-(2-hydroxy-2-methylpropoxy)-4-hexadecanoyloxy-2,2,6,6-tetramethylpiperidine, the reaction product of 1-oxyl-4-hydroxy-2,2,6,6-tetramethylpiperidine with a carbon radical from t-amylalcohol, 1-(2-hydroxy-2-methylpropoxy)-4-hydroxy-2,2,6,6-tetramethylpiperidine, 1-(2-hydroxy-2-methylpropoxy)-4-oxo-2,2,6,6-tetramethylpiperidine, bis(1-(2-hydroxy-2-methylpropoxy)-2,2,6,6-tetramethylpiperidin-4-yl) sebacate, bis(1-(2-hydroxy-2-methylpropoxy)-2,2,6,6-tetramethylpiperidin-4-yl) adipate, bis(1-(2-hydroxy-2-methylpropoxy)-2,2,6,6-tetramethylpiperidin-4-yl) succinate, bis(1-(2-hydroxy-2-methylpropoxy)-2,2,6,6-tetramethylpiperidin-4-yl) glutarate and 2,4-bis{N-[1-(2-hydroxy-2-methylpropoxy)-2,2,6,6-tetramethylpiperidin-4-yl]-N-butylamino}-6-(2-hydroxyethylamino)-s-triazine.

2.8. Oxamides, for example 4,4'-dioctyloxyoxanilide, 2,2'-diethoxyoxanilide, 2,2'-dioctyloxy-5,5'-di-tert-butoxanilide, 2,2'-didodecyloxy-5,5'-di-tert-butoxanilide, 2-ethoxy-2'-ethyloxanilide, N,N'-bis(3-dimethylaminopropyl)oxamide, 2-ethoxy-5-tert-butyl-2'-ethoxanilide and its mixture with 2-ethoxy-2'-ethyl-5,4'-di-tert-butoxanilide, mixtures of o- and p-methoxy-disubstituted oxanilides and mixtures of o- and p-ethoxy-disubstituted oxanilides.

2.9. 2-(2-Hydroxyphenyl)-1,3,5-triazines, for example 2,4,6-tris(2-hydroxy-4-octyloxyphenyl)-1,3,5-triazine, 2-(2-hydroxy-4-octyloxyphenyl)-4,6-bis(2,4-dimethylphenyl)-1,3,5-triazine, 2-(2,4-dihydroxyphenyl)-4,6-bis(2,4-dimethylphenyl)-1,3,5-triazine, 2,4-bis(2-hydroxy-4-propyloxyphenyl)-6-(2,4-dimethylphenyl)-1,3,5-triazine, 2-(2-hydroxy-4-octyloxyphenyl)-4,6-bis(4-methylphenyl)-1,3,5-triazine, 2-(2-hydroxy-4-dodecyloxyphenyl)-4,6-bis(2,4-dimethylphenyl)-1,3,5-triazine, 2-(2-hydroxy-4-tridecyloxyphenyl)-4,6-bis(2,4-dimethylphenyl)-1,3,5-triazine, 2-[2-hydroxy-4-(2-hydroxy-3-butyloxypropoxy)phenyl]-4,6-bis(2,4-dimethyl)-1,3,5-triazine, 2-[2-hydroxy-4-(2-hydroxy-3-octyloxypropyloxy)phenyl]-4,6-bis(2,4-dimethyl)-1,3,5-triazine, 2-[4-(dodecyloxy/tridecyloxy-2-hydroxypropoxy)-2-hydroxyphenyl]-4,6-bis(2,4-dimethylphenyl)-1,3,5-triazine,2-[2-hydroxy-4-(2-hydroxy-3-dodecyloxypropoxy)phenyl]-4,6-bis(2,4-dimethylphenyl)-1,3,5-triazine, 2-(2-hydroxy-4-hexyloxy)phenyl-4,6-diphenyl-1,3,5-triazine, 2-(2-hydroxy-4-methoxyphenyl)-4,6-diphenyl-1,3,5-triazine, 2,4,6-tris[2-hydroxy-4-(3-butoxy-2-hydroxypropoxy)phenyl]-1,3,5-triazine, 2-(2-hydroxyphenyl)-4-(4-methoxyphenyl)-6-phenyl-1,3,5-triazine, 2-{2-hydroxy-4-[3-(2-ethylhexyl-1-oxy)-2-hydroxypropyloxy]phenyl]-4,6-bis(2,4-dimethylphenyl)-1,3,5-triazine.

3. Metal deactivators, for example N,N'-diphenyloxamide, N-salicylal-N'-salicyloyl hydrazine, N,N'-bis(salicyloyl)hydrazine, N,N'-bis(3,5-di-tert-butyl-4-hydroxyphenylpropionyl)hydrazine, 3-salicyloylamino-1,2,4-triazole, bis(benzylidene)oxalyl dihydrazide, oxanilide, isophthaloyl dihydrazide, sebacoyl bisphenylhydrazide, N,N'-diacetyladipoyl dihydrazide, N,N'-bis(salicyloyl)oxalyl dihydrazide, N,N'-bis(salicyloyl)thiopropionyl dihydrazide.

4. Phosphites and phosphonites, for example triphenyl phosphite, diphenylalkyl phosphites, phenyldialkyl phosphites, tris(nonylphenyl) phosphite, trilauryl phosphite, trioctadecyl phosphite, distearylpentaerythritol diphosphite, tris(2,4-di-tert-butylphenyl) phosphite, diisodecyl pentaerythritol diphosphite, bis(2,4-di-tert-butylphenyl)pentaerythritol diphosphite, bis(2,4-dicumylphenyl)pentaerythritol diphosphite, bis(2,6-di-tert-butyl-4-methylphenyl)pentaerythritol diphosphite, diisodecyloxypentaerythritol diphosphite, bis(2,4-di-tert-butyl-6-methylphenyl)-pentaerythritol diphosphite, bis(2,4,6-tris(tert-butylphenyl)pentaerythritol diphosphite, tristearyl sorbitol triphosphite, tetrakis(2,4-di-tert-butylphenyl) 4,4'-biphenylene diphosphonite, 6-isooctyloxy-2,4,8,10-tetra-tert-butyl-12H-dibenz[d,g]-1,3,2-dioxaphosphocin, bis(2,4-di-tert-butyl-6-methylphenyl)methyl phosphite, bis(2,4-di-tert-butyl-6-methylphenyl)ethyl phosphite, 6-fluoro-2,4,8,10-tetra-tert-butyl-12-methyl-dibenz[d,g]-1,3,2-dioxaphosphocin, 2,2',2"-nitrilo-[triethyltris(3,3',5,5'-tetra-tert-butyl-1,1'-biphenyl-2,2'-diyl)phosphite], 2-ethylhexyl(3,3',5,5'-tetra-tert-butyl-1,1'-biphenyl-2,2'-diyl)phosphite, 5-butyl-5-ethyl-2-(2,4,6-tri-tert-butylphenoxy)-1,3,2-dioxaphosphirane.

The following phosphites are especially preferred:

Tris(2,4-di-tert-butylphenyl) phosphite (Irgafos 168 (RTM), Ciba Specialty Chemicals Inc.), tris(nonylphenyl) phosphite,

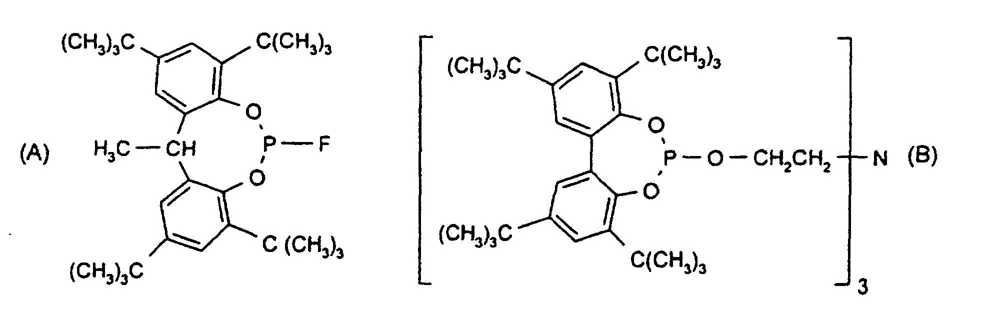

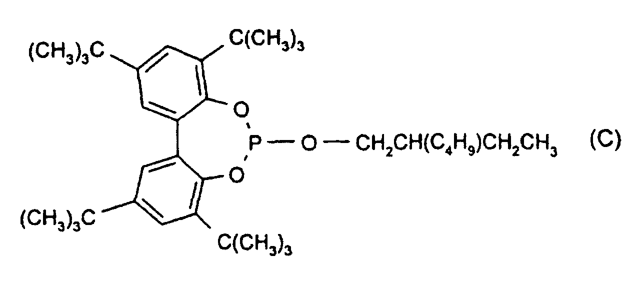

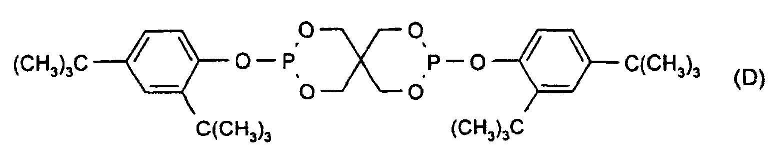

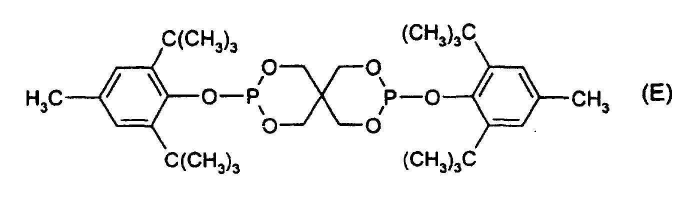

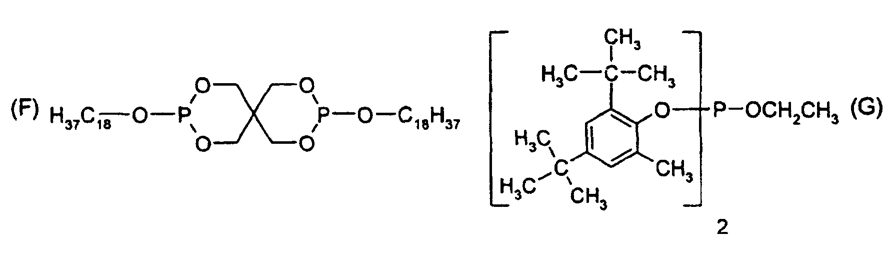

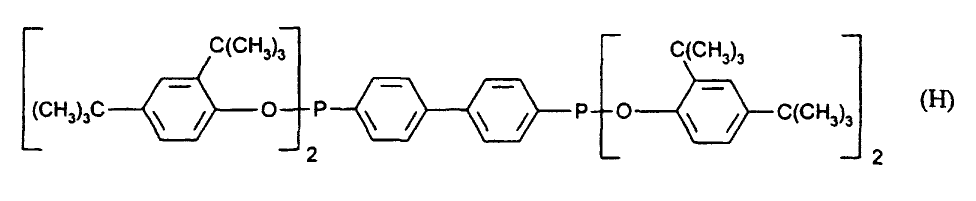

5. Benzofuranones and indolinones, for example those disclosed in U.S. 4,325,863; U.S. 4,338,244; U.S. 5,175,312; U.S. 5,216,052; U.S. 5,252,643; DE-A-4316611; DE-A-4316622; DE-A-4316876; EP-A-0589839 or EP-A-0591102 or 3-[4-(2-acetoxyethoxy)-phenyl]-5,7-di-tert-butylbenzofuran-2-one, 5,7-di-tert-butyl-3-[4-(2-stearoyloxyethoxy)phenyl]-benzofuran-2-one, 3,3'-bis[5,7-di-tert-butyl-3-(4-[2-hydroxyethoxy]phenyl)benzofuran-2-one], 5,7-di-tert-butyl-3-(4-ethoxyphenyl)benzofuran-2-one, 3-(4-acetoxy-3,5-dimethylphenyl)-5,7-di-tert-butylbenzofuran-2-one, 3-(3,5-dimethyl-4-pivaloyloxyphenyl)-5,7-di-tert-butylbenzofuran-2-one, 3-(3,4-dimethylphenyl)-5,7-di-tert-butylbenzofuran-2-one, 3-(2,3-dimethylphenyl)-5,7-di-tert-butylbenzofuran-2-one.

6. Thiosynergists, for example dilauryl thiodipropionate or distearyl thiodipropionate.

7. Peroxide scavengers, for example esters of β-thiodipropionic acid, for example the lauryl, stearyl, myristyl or tridecyl esters, mercaptobenzimidazole or the zinc salt of 2-mercaptobenzimidazole, zinc dibutyldithiocarbamate, dioctadecyl disulfide, pentaerythritol tetrakis(β-dodecylmercapto)propionate.

8. Polyamide stabilizers, for example copper salts in combination with iodides and/or phosphorus compounds and salts of divalent manganese.

9. Basic co-stabilisers, for example melamine, polyvinylpyrrolidone, dicyandiamide, triallyl cyanurate, urea derivatives, hydrazine derivatives, amines, polyamides, polyurethanes, alkali metal salts and alkaline earth metal salts of higher fatty acids, for example calcium stearate, zinc stearate, magnesium behenate, magnesium stearate, sodium ricinoleate and potassium palmitate, antimony pyrocatecholate or zinc pyrocatecholate.

10. Nucleating agents, for example inorganic substances, such as talcum, metal oxides, such as titanium dioxide or magnesium oxide, phosphates, carbonates or sulfates of, preferably, alkaline earth metals; organic compounds, such as mono- or polycarboxylic acids and the salts thereof, e.g. 4-tert-butylbenzoic acid, adipic acid, diphenylacetic acid, sodium succinate or sodium benzoate; polymeric compounds, such as ionic copolymers (ionomers). Especially preferred are 1,3:2,4-bis(3',4'-dimethylbenzylidene)sorbitol, 1,3:2,4-di(paramethyldibenzylidene)sorbitol, and 1,3:2,4-di(benzylidene)sorbitol.

11. Fillers and reinforcing agents, for example calcium carbonate, silicates, glass fibres, glass bulbs, asbestos, talc, kaolin, mica, barium sulfate, metal oxides and hydroxides, carbon black, graphite, wood flour and flours or fibers of other natural products, synthetic fibers.

12. Dispersing agents, such as polyethylene oxide waxes or mineral oil.

13. Other additives, for example plasticisers, lubricants, emulsifiers, pigments, dyes, rheology additives, catalysts, flow-control agents, optical brighteners, slip agents, crosslinking agents, crosslinking boosters, halogen scavengers, smoke inhibitors, flameproofing agents, antistatic agents, clarifiers such as substituted and unsubstituted bisbenzylidene sorbitols, benzoxazinone UV absorbers such as 2,2'-p-phenylene-bis(3,1-benzoxazin-4-one), Cyasorb 3638 (RTM) (CAS# 18600-59-4), and blowing agents.

It is also contemplated that the present polyester or polyamide prepared according to the present process may be further stabilized against the formation of aldehydic contaminants during melt processing with the incorporation therein of poly(vinyl alcohol), ethylene/vinyl alcohol copolymer, polyhydric alcohols, polyacrylamide, polymethacrylamide or an acrylamide or methacrylamide copolymer with at least one ethylenically unsaturated comonomer.

Accordingly, the present invention also pertains to a process for preventing the formation of aldehydic contaminants during melt processing of (a) a polyester or polyamide which comprises incorporating into said polyester or polyamide
(b) a compound selected from the group consisting of
i.) hydroxylamine stabilizers,
ii.) O-substituted hydroxylamine stabilizers,
iii.) nitrone stabilizers, and
iv.) amine oxide stabilizers, and optionally
(c) an effective stabilizing amount of a polymer which is poly(vinyl alcohol) or an ethylene/vinyl alcohol copolymer; and optionally
(d) an effective stabilizing amount of a polyhydric alcohol of the formula E-(OH)ₙ , where n is 2 to 4000, and E is a hydrocarbyl moiety; and optionally
(e) an effective stabilizing amount of a polymer which is polyacrylamide, polymethacrylamide or an acrylamide or methacrylamide copolymer with at least one ethylenically unsaturated comonomer.

A hydrocarbyl moiety according to this invention is for example an aliphatic, cycloaliphatic, aromatic or a mono-, di- or poly-saccharride moiety.

The hydrocarbyl moieties for the definition of E may be interrupted by heteroatoms, for example by -O-.

Polyhydric alcohols of component (d) may be for example glycerin, 1,2,3-butanetriol, 1,2,4-butanetriol, erythritol, ribitol, xylitol, dulcitol, sorbitol, 1,2,3-cyclohexatriol, inositol, glucose, galactose, mannose, galacturonic acid, xylose, glucosamine, galactosamine, 1,1,2,2-tetramethytoylcyclohexane, 1,1,1-trimethylolpropane, 1,1,2-trimethyloylpropane, 1,1,1-trimethylolbutane, 1,1,2-trimethylolbutane, 1,1,1-trimethylolpentane, 1,1,2-trimethylolpentane, 1,2,2-trimethylolpentane, trimethylolpentane, pentaerythritol, dipentaerythritol, 1,1,3,3-tetrahydroxypropane, 1,1,5,5-tetrahydroxypentane, 2,2,6,6-tetrakis(hydroxymethyl)cyclohexane and 2,2,6,6-tetrakis(hydroxymethyl)cyclohexanol.

Of special interest is trimethylolpentane, pentaerythritol or dipentaerythritol.

The polyhydric alcohol is for instance starch, cellulose or a sugar or a sugar alcohol.

The polyhydric alcohols include degraded starch (dextrins and cyclodextrins), maltose and its derivatives, maltitol, maltopentaose hydrate, maltoheptaose, maltotetraose, maltulose monohydrate, D,L-glucose, dextrose, sucrose and D-mannitol.

Commercial polyhydric alcohols include trimethylol propane, triethylol propane, glycerol, sorbitol and pentaerythritol.

The polyester or polyamide of component (a) is 95-99.99 % by weight and the polymer of component (c) is 5 to 0.01 % by weight, based on the total weight of (a) and (c).

For instance, the polyester or polyamide of component (a) is 99.925-99.995 % by weight and component (c) is 0.075 to 0.005 % by weight based on the total weight of components (a) and (c).

The polyester or polyamide of component (a) is 95-99.99 % by weight and the polyhydric alcohol of component (d) is 5 to 0.01 % by weight, based on the total weight of (a) and (d).

For instance, component (a) is 98-99.99 % by weight and component (d) is 2 to 0.01 % by weight of the total weight of (a) and (d); for instance component (a) is 99 to 99.97 % by weight and component (d) is 1 to 0.03 % by weight of the total weight of (a) and (d).

The polyester or polyamide of component (a) is 95-99.99 % by weight and the polymer of component (e) is 5 to 0.01 % by weight, based on the total weight of (a) and (e).

It has also been found that certain pigments and/or dyes or other colorants, in the compositions of this invention, prevent yellowing of the stabilized polyester and polyamide compositions.

Accordingly, the present invention also pertains to a process for preventing the formation of aldehydic contaminants and against yellowing during melt processing of (a) a polyester or polyamide which comprises incorporating into said polyester or polyamide (b) an effective stabilizing amount of a compound selected from the group consisting of
i.) hydroxylamine stabilizers,
ii.) O-substituted hydroxylamine stabilizers,
iii.) nitrone stabilizers, and
iv.) amine oxide stabilizers, and
(c) one or more colorants selected from the group consisting of pigments and dyes.

Suitable pigments or dyes are organic or inorganic. For example cobalt salts, ultramarine blue, polymer soluble blue dyestuffs, and copper phthalocyanine blue are suitable. Cobalt salts are for example cobalt aluminate, cobalt acetate, cobalt stearate and cobalt octoate. Suitable pigments are for example red, blue or violet organic pigments. For example, organic pigments of the Diketo pyrrolo pyrrole, quinacridone, azo condensation, anthraquinone, perinone, chrome complex, benzimidazolone, aminoanthraquinone, napthol, indanthrone, carbazole dioxazine and perylene classes are suitable. Suitable pigments and dyes include Ciba Cromophtal Violet B and Violet GT (RTM) (of the dioxazine class), Pigment Violet 23 and 37, Disperse Violet 57, Solvent Violet 13, Ciba Oracet Violet TR (RTM), Ciba Oracet Violet B (RTM), and Bayer Macrolex Violet B Gran (RTM) (of the anthraquinone dye class), PV-19, Cromophtal Violet R RT-891-D (RTM), Cromophtal Red 2020 (RTM), Monastral Red Y RT-759 (RTM), Monastral Red B RT-790-D (RTM), PR-202 (RTM), Monastral Magenta RT-235-D (RTM), and Monastral Red B RT195-D (RTM) all of the quinacridone pigment class. SV-46 (RTM), Filamid Violet RB (RTM) (1:2 chrome complex dyes), and SB-132 (RTM), Filamid Blue R (RTM) (anthraquinone) are also suitable. Additional colorants include, PR-177 (RTM), Cromophtal Red A3B (RTM) (anthraquinone), PR-264 (RTM), Irgazin DPP Rubine TR (RTM) (diketo pyrrolo pyrrole), SR-135 (RTM), Oracet Red G (RTM) (perinone), PB 15:3 (RTM), Cromophtal Blue 4GNP (RTM), Cromophtal Blue LGLD (RTM), PB 15:1 (RTM), Irgalite Blue BSP (RTM), PB-60 (RTM), Cromophtal Blue A3R (RTM) (indanthrone), SB-67 (RTM), and Ciba Oracet Blue G (RTM).

The following examples are for illustrative purposes only and are not to be construed to limit the scope of the instant invention in any manner whatsoever.

General - PET bottle grade pellets are subjected to extrusion compounding to simulate the heat history which PET experiences when thermally injection molded into bottle preforms and subsequently stretch-blow molded into bottles. The efficacy of an additive added to reduce the formation of acetaldehyde is determined by quantitative analysis using thermal desorption GC-MS or GC-FID after adoption of published methods. An unstabilized PET is extruded each day to provide a control polymer for measuring acetaldehyde formation.

Extrusion - PET is pre-dried in vacuo under nitrogen at an oven temperature of about 70°C to a moisture level of about 30 ppm which is verified on a Mitsubishi VA-O6 moisturemeter. A Leistritz 18 mm or 27 mm co-rotating, non-intermeshing twin screw extruder is configured as follows: set temps = throat (220-230°C), zones and die (270°C), actual extrudate melt temperature is 275-280°C, screw at 100-110 rpm, hopper feeder = 10-15 ppm.

PET Pellet Color - Yellowness Index (YI), and L*, a*, b* by ASTM D1925, D65 10degm specular included, measured on PET pellets using a DCI spectrophotometer.

Acetaldehyde Analysis - The concentration of acetaldehyde in PET is quantitatively determined using a thermal desorption GC-MS method adapted from B. Nijassen et al., Packaging Technology and Science, 9, 175 (1996); S. Yong Lee, SPE ANTEC 1997, pp 857-861; and M. Dong et al., J. Chromatographic Science, 18, 242 (1980). A general example follows below:

The PET samples are analyzed, in duplicate, by weighing 250 mg of powdered PET pellets (cryogenically pulverized) in a 5 mL crimp sealed headspace vial. The sample vial is heated at 120°C for one hour in a Tekmar model 5000 static headspace analyzer. The headspace gas (5 cc) is then transferred via a heated transfer line to a Fisons MD-800 GC-MS system for SIR detection of the acetaldehyde. The acetaldehyde is detected by monitoring its fragment ions of 29 and 44 m/e. The Total Ion Current (TIC) of the GC-MS is also monitored in the retention time region of 4-8 minutes. By doing this the presence of acetaldehyde in the samples is confirmed by three different detectors. Alternatively, a GC equipped with a flame ionization detector (FID) is used in place of the GC-MS system. By using a known acetaidehyde value for PET, the ratio of peak areas for the known PET resin and for the experimental PET resin blends are compared and the amount of acetaldehyde in the experimental blend can be obtained.

### Example 1: Stabilization of poly(ethylene terephthalate) (PET).

Unstabilized commercial PET [CLEARTUF 7207 (RTM), Shell] is used as a control PET. When PET is extrusion compounded, a significant reduction in the amount of acetaldehyde (AA) is observed in samples stabilized with additives of the present invention compared to unstabilized PET. The % AA reduction is the amount less compared to the amount of AA in the control, all measured by GC-FID. Additive levels are in parts per million (ppm) based on PE. The results are summarized in Table 1.

**Table 1:**

| Formulation | Additive | Additive Level (ppm) | % AA Reduction | GC-FID avg. ppm AA |
|---|---|---|---|---|
| Control | ― | ― | ― | 3.2 |
| A | nitrone | 1500 | 47 | 1.7 |
| B | nitrone | 5000 | 56 | 1.4 |
| C | nitrone | 15000 | 44 | 1.8 |
| D | hydroxylamine-A | 1500 | 53 | 1.5 |
| E | hydroxylamine-A | 5000 | 69 | 1.0 |
| F | hydroxylamine-A | 15000 | 62 | 1.2 |
| "Hydroxylamine-A" is N,N-di(hydrogenated tallow)hydroxylamine as prepared in Example 9 of U.S. 4,876,300. "Nitrone" is the corresponding nitrone, that is primarily N-octadecyl-α-heptadecylnitrone. | | | | |

It is seen that the additives of the present invention provide significant reduction of acetaldehyde versus the control in PET.

### Example 2: Stabilization of poly(ethylene terephthalate) (PET).

Unstabilized commercial PET [CLEARTUF 7207 (RTM), Shell, Certificate of Analysis of 1.4 ppm AA as received] is used as a control PET. Upon a single extrusion heat history, the unstabilized PET increases in acetaldehyde (AA) content to an avg. of 3.0 ppm, indicating that PET produces undesirable AA upon heated melt processing. When PET is extrusion compounded, a significant reduction in the amount of acetaldehyde (AA) is observed in samples stabilized with additives of the present invention compared to unstabilized PET. The % AA reduction is the amount less compared to the amount of AA in the control, all measured by GC-FID. Additive levels are in parts per million (ppm) based on PET. The results are summarized in Table 2.

**Table 2:**

| Formulation | Additive | Additive Level (ppm) | % AA Reduction | GC-FID avg. ppm AA |
|---|---|---|---|---|
| Control | ― | ― | ― | 3.0 |
| G | nitrone | 500 | 24 | 2.3 |
| H | nitrone | 1500 | 51 | 1.5 |
| I | nitrone | 5000 | 57 | 1.3 |
| J | hydroxylamine-A | 500 | 29 | 2.1 |
| K | hydroxylamine-A | 1500 | 35 | 1.9 |
| L | hydroxylamine-A | 5000 | 64 | 1.1 |
| M | DBHA | 500 | 12 | 2.6 |
| N | DBHA | 1500 | 30 | 2.1 |
| O | DBHA | 5000 | 38 | 1.9 |
| "Hydroxylamine-A" is N,N-di(hydrogenated tallow)hydroxylamine as prepared in Example 9 of U.S. 4,876,300. "Nitrone" is the corresponding nitrone, that is primarily N-octadecyl-α-heptadecylnitrone. "DBHA" is a dibenzyl hydroxylamine, Aldrich Chemical Co., 98+ %. | | | | |

It is seen that the additives of the present invention provide significant reduction of acetaldehyde versus the control in PET.

### Example 3: Stabilization of poly(ethylene terephthalate) (PET).

Unstabilized commercial PET [CLEARTUF 8006 (RTM), Shell] is used as a control PET. When PET is extrusion compounded, a significant reduction in the amount of acetaldehyde (AA) is observed in samples stabilized with additives of the present invention compared to unstabilized PET. The % AA reduction is the amount less compared to the amount of AA in the control, all measured by GC-FID. Additive levels are in parts per million (ppm) based on PET. The results are summarized in Table 3.

**Table 3:**

| Formulation | Additive | Additive Level (ppm) | % AA Reduction | GC-FID avg. ppm AA |
|---|---|---|---|---|
| Control | ― | ― | ― | 4.2 |
| P | hydroxylamine-A | 500 | 30 | 3.0 |
| Q | hydroxylamine-A | 2500 | 63 | 1.6 |
| R | hydroxylamine-B | 500 | 21 | 3.3 |
| S | hydroxylamine-B | 2500 | 63 | 1.6 |
| T | amine oxide | 500 | 32 | 2.9 |
| U | amine oxide | 2500 | 52 | 2.0 |
| "Hydroxylamine-A" is N,N-di(hydrogenated tallow)hydroxylamine as prepared in Example 9 of U.S. 4,876,300. "Hydroxylamine-B" is a commercial sample of N,N-di(hydrogenated tallow)hydroxylamine, Irgastab FS-042 (RTM), Ciba Specialty Chemicals Corp., CAS# 143925-92-2. "Amine oxide" is Genox EP (RTM), a di(C₁₆-C₁₈)alkyl methyl amine oxide, CAS# 204933-93-7, GE Chemicals. | | | | |

It is seen that the additives of the present invention provide significant reduction of acetaldehyde versus the control in PET.

### Example 4: Stabilization of poly(ethylene terephthalate) (PET).

Unstabilized commercial PET [CLEARTUF 8006 (RTM), Shell] is used as a control PET. When PET is extrusion compounded, a significant reduction in the amount of acetaldehyde (AA) is observed in samples stabilized with an additive of the present invention compared to unstabilized PET. The % AA reduction is the amount less compared to the amount of AA in the control, all measured by GC-FID. Additive levels are in parts per million (ppm) based on PET. The results are summarized in Table 4.

**Table 4:**

| Formulation | Additive | Additive Level (ppm) | % AA Reduction | GC-FID avg. ppm AA |
|---|---|---|---|---|
| Control | ― | ― | ― | 3.2 |
| V | acetoxyamine | 1500 | 30 | 2.2 |
| W | acetoxyamine | 5000 | 61 | 1.2 |
| Acetoxyamine is N,N-di(hydrogenated tallow)acetoxyamine prepared from hydroxylamine-A of Example 1 and acetic anhydride. | | | | |

It is seen that the acetoxyamine of the present invention provides significant reduction of acetaldehyde versus the control in PET.

### Example 5: Stabilization of poly(ethylene terephthalate) (PET).

A base PET resin is prepared by extrusion compounding hydroxylamine-B [N,N-di(hydrogennated tallow)hydroxylamine, Irgastab FS-042 (RTM), Ciba Specialty Chemicals Corp.] at 0.25 wt% into PET. The base resin is redried, and the formulations of the table 5 below are prepared by extrusion compounding PET color concentrates with the PET base resin. The formulated products are redried and injection molded into 60 mil plaques and color data is obtained on a DCI Colorimeter in transmission mode. Comparison of the color value for the PET base resin containing 0.25% Irgastab FS-042 (RTM) (b* value = 10.83) with the colored formulations indicates that yellowing is significantly prevented in the present compositions stabilized against acetaldehyde formation. Oracet Violet TR (dye) is of the anthraquinone class. Cromophtal Blue 4GNP is of the phthalocyanine class.

**Table 5:**

| Formulation | Colorant | Colorant Level (ppm) | L* | a* | b* | corrected YI |
|---|---|---|---|---|---|---|
| Control | ― | ― | 93.9 | -1.51 | 10.83 | 14.4 |
| 75 | Violet TR | 1 | 94.7 | -1.30 | 7.02 | 8.74 |
| 76 | Violet TR | 2 | 94.2 | -1.30 | 6.90 | 8.59 |
| 77 | Violet TR | 4 | 93.3 | -1.26 | 6.03 | 7.23 |
| 78 | Violet TR | 5 | 92.0 | -1.75 | 6.81 | 8.31 |
| 79 | Violet TR | 10 | 91.5 | -1.56 | 4.14 | 3.86 |
| 80 | Crom. Blue 4GNP | 1 | 94.1 | -2.91 | 6.55 | 6.78 |
| 81 | Crom. Blue 4GNP | 5 | 91.7 | -1.65 | 5.47 | 6.09 |
| 82 | Crom. Blue 4GNP | 10 | 92.9 | -7.14 | 5.45 | 1.80 |
| 83 | Violet TR | 1 | 94.4 | -1.90 | 6.84 | 8.01 |
| | Crom. Blue 4GNP | 1 | | | | |

### Example 6:

Polyamide 4; 6,6; 6; 12; and 6,4 molded articles, fibers and films and PET fibers and films, are prepared by melt extrusion with additives as in Examples 1-5. Significant reduction in aldehydic contaminants is observed.

### Example 7:

Examples 1-6 are repeated with the further inclusion of dipentaerythritol in the inventive formulations. Excellent results are achieved.

## Claims

1. A process for preventing the formation of aldehydic contaminants during melt processsing of (a) a polyester or polyamide which comprises incorporating into said polyester or polyamide (b) an effective stabilizing amount of a compound selected from the group consisting of
i.) hydroxylamine stabilizers,
ii.) O-substituted hydroxylamine stabilizers,
iii.) nitrone stabilizers, and
iv.) amine oxide stabilizers.

2. A process according to claim 1 wherein the polyester or polyamide of component (a) is 95-99.99 % by weight and the stabilizers of component (b), in total, are 5 to 0.01 % by weight, based on the total weight of (a) and (b).

3. A process according to claim 1 wherein the polyester of component (a) is poly(ethylene terephthalate) PET or poly(ethylene 2,6-naphthalene-2,6-dicarboxylate).

4. A process according to claim 1 in which the hydroxylamine stabilizers of component i.) are compounds of the formula I 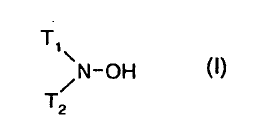 wherein
T₁ is straight or branched chain alkyl of 1 to 36 carbon atoms, cycloalkyl of 5 to 12 carbon atoms, aralkyl of 7 to 9 carbon atoms, or said aralkyl substituted by one or two alkyl of 1 to 12 carbon atoms or by one or two halogen atoms; and
T₂ is hydrogen, or independently has the same meaning as T₁; or the hydroxylamine stabilizers of component i.) are compounds that contain one or more of the groups of the formula (II) 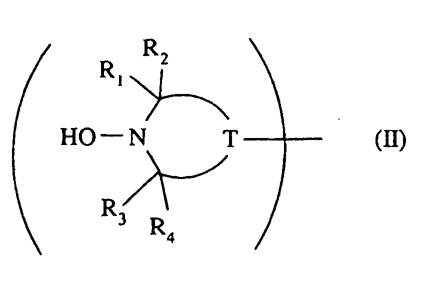 wherein
T is a group forming a five- or six-membered ring; and
R₁, R₂, R₃ and R₄ are independently hydrogen, alkyl of 1 to 4 carbon atoms or phenyl.

5. A process according to claim 1 in which the hydroxylamine stabilizers of component i.) are selected from the group consisting of N,N-dibenzylhydroxylamine, N,N-diethylhydroxylamine, N,N-dioctylhydroxylamine, N,N-dilaurylhydroxylamine, N,N-didodecylhydroxylamine, N,N-ditetradecylhydroxylamine, N,N-dihexadecylhydroxylamine, N,N-dioctadecylhydroxylamine, N-hexadecyl-N-tetradecylhydroxylamine, N-hexadecyl-N-heptadecylhydroxylamine, N-hexadecyl-N-octadecylhydroxylamine, N-heptadecyl-N-octadecylhydroxylamine, N-methyl-N-octadecylhydroxylamine and N,N-di(hydrogenated tallow)hydroxylamine.

6. A process according to claim 1 in which component i.) is the N,N-di(alkyl)hydroxylamine produced by the direct oxidation of N,N-di(hydrogenated tallow)amine.

7. A process according to claim 1 in which the O-substituted hydroxylamine stabilizers of component ii.) are of the formula III or IV 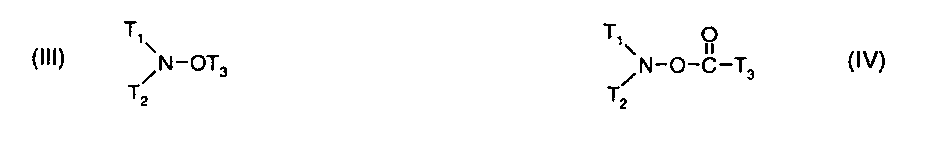 wherein
T₁ is straight or branched chain alkyl of 1 to 36 carbon atoms, cycloalkyl of 5 to 12 carbon atoms, aralkyl of 7 to 9 carbon atoms, or said aralkyl substituted by one or two alkyl of 1 to 12 carbon atoms or by one or two halogen atoms;
T₂ is hydrogen, or independently has the same meaning as T₁; and
T₃ is allyl, straight or branched chain alkyl of 1 to 36 carbon atoms, cycloalkyl of 5 to 18 carbon atoms, cycloalkenyl of 5 to 18 carbon atoms or a straight or branched chain alkyl of 1 to 4 carbon atoms substituted by phenyl or by phenyl substituted by one or two alkyl groups of 1 to 4 carbon atoms or by 1 or 2 halogen atoms.

8. A process according to claim 1 in which component ii.) is O-allyl-N,N-dioctadecylhydroxylamine or O-n-propyl-N,N-dioctadecylhydroxylamine or N,N-di(hydrogenated tallow)acetoxyamine.

9. A process according to claim 1 in which the nitrone stabilizers of component iii.) are of the formula V 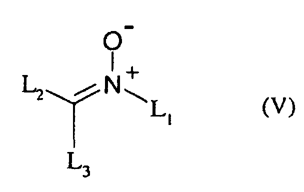 wherein
L₁ is straight or branched chain alkyl of 1 to 36 carbon atoms, cycloalkyl of 5 to 12 carbon atoms, aralkyl of 7 to 9 carbon atoms, or said aralkyl substituted by one or two alkyl of 1 to 12 carbon atoms or by one or two halogen atoms; and
L₂ and L₃ are independently hydrogen, straight or branched chain alkyl of 1 to 36 carbon atoms, cycloalkyl of 5 to 12 carbon atoms, aralkyl of 7 to 9 carbon atoms, or said aralkyl substituted by one or two alkyl of 1 to 12 carbon atoms or by one or two halogen atoms; or L₁ and L₂ together form a five- or six-membered ring including the nitrogen atom.

10. A process according to claim 1 in which the nitrone stabilizers of component iii.) are selected from the group consisting of N-benzyl-α-phenylnitrone, N-ethyl-α-methylnitrone, N-octyl-α-heptylnitrone, N-lauryl-α-undecylnitrone, N-tetradecyl-α-tridcylnitrone, N-hexadecyl-α-pentadecylnitrone, N-octadecyl-α-heptadecylnitrone, N-hexadecyl-α-heptadecylnitrone, N-ocatadecyl-α-pentadecylnitrone, N-heptadecyl-α-heptadecylnitrone, N-octadecyl-α-hexadecylnitrone, N-methyl-α-heptadecylnitrone and the nitrone derived from N,N-di(hydrogenated tallow)hydroxylamine.

11. A process according to claim 1 in which the amine oxide stabilizers of component iv.) are compounds of the formula VI 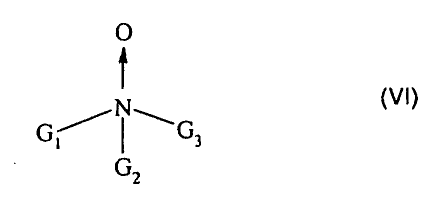 wherein
G₁ and G₂ are independently a straight or branched chain alkyl of 6 to 36 carbon atoms, aryl of 6 to 12 carbon atoms, aralkyl of 7 to 36 carbon atoms, alkaryl of 7 to 36 carbon atoms, cycloalkyl of 5 to 36 carbon atoms, alkcycloalkyl of 6 to 36 carbon atoms or cycloalkylalkyl of 6 to 36 carbon atoms;
G₃ is a straight or branched chain alkyl of 1 to 36 carbon atoms, aryl of 6 to 12 carbon atoms, aralkyl of 7 to 36 carbon atoms, alkaryl of 7 to 36 carbon atoms, cycloalkyl of 5 to 36 carbon atoms, alkcycloalkyl of 6 to 36 carbon atoms or cycloalkylalkyl of 6 to 36 carbon atoms; with the proviso that at least one of G₁,G₂ and G₃ contains a b carbon-hydrogen bond; and wherein said aryl groups may be substituted by one to three halogen, alkyl of 1 to 8 carbon atoms, alkoxy of 1 to 8 carbon atoms or combinations thereof; and wherein said alkyl, aralkyl, alkaryl, cycloalkyl, alkcycloalkyl and cycloalkylalkyl groups may be interrupted by one to sixteen -O-, -S-, -SO-, -SO₂-, -COO-, -OCO-, -CO-, -NG₄-, -CONG₄- and -NG₄CO-groups, or wherein said alkyl, aralkyl, alkaryl, cycloalkyl, alkcycloalkyl and cycloalkylalkyl groups may be substituted by one to sixteen groups selected from -OG₄, -SG₄, -COOG₄, -OCOG₄, -COG₄, -N(G₄)₂, -CON(G₄)₂, -NG₄COG₄ and 5- and 6-membered rings containing the -C(CH₃)(CH₂Rₓ)NL(CH₂Rₓ)(CH₃)C- group or wherein said alkyl, aralkyl, alkaryl, cycloalkyl, alkcycloalkyl and cycloalkylalkyl groups are both interrupted and substituted by the groups mentioned above; and
wherein
G₄ is independently hydrogen or alkyl of 1 to 8 carbon atoms;
Rₓ is hydrogen or methyl;
L is hydrogen, hydroxy, C₁₋₃₀ straight or branched chain alkyl moiety, a -C(O)R moiety where R is a C₁₋₃₀ straight or branched chain alkyl group, or a -OR_{y} moiety; and
R_{y} is C₁₋₃₀ straight or branched chain alkyl, C₂-C₃₀ alkenyl, C₂-C₃₀ alkynyl, C₅-C₁₂ cycloalkyl, C₆-C₁₀ bicycloalkyl, C₅-C₈ cycloalkenyl, C₆-C₁₀ aryl, C₇-C₉ aralkyl, C₇-C₉ aralkyl substituted by alkyl or aryl, or -CO(D), where D is C₁-C₁₈ alkyl, C₁-C₁₈ alkoxy, phenyl, phenyl substituted by hydroxy, alkyl or alkoxy, or amino or amino mono- or di-substituted by alkyl or phenyl.

12. A process according to claim 1 comprising optionally
(c) a polymer which is poly(vinyl alcohol) or an ethylene/vinyl alcohol copolymer; and optionally
(d) a polyhydric alcohol of the formula E-(OH)ₙ , where n is 2 to 4000, and E is a hydrocarbyl moiety; and optionally
(e) a polymer which is polyacrylamide, polymethacrylamide or an acrylamide or methacrylamide copolymer with at least one ethylenically unsaturated comonomer.

13. A process according to claim 1 comprising additionally (c) one or more colorants selected from the group consisting of pigments and dyes.

14. A process for preventing the formation of aldehydic contaminants during melt processing of (a) a mono- or multi-layered polyester or polyamide container or film which comprises at least one layer which comprises incorporating into said material (b) an effective amount of a compound selected from the group consisting of
i.) hydroxylamine stabilizers,
ii.) O-substituted hydroxylamine stabilizers,
iii.) nitrone stabilizers and
iv.) amine oxide stabilizers.

15. A process according to claim 14 in which the container is a rigid bottle.

16. Use of component (b) according to claim 1 for preventing the formation of aldehydic contaminants during melt processing of a polyester or a polyamide.

## Patentansprüche

1. Verfahren zur Verhinderung der Bildung von Aldehydverunreinigungen während des Schmelzverarbeitens von (a) einem Polyester oder Polyamid, welches das Einbringen in den Polyester oder Polyamid (b) einer effektiv stabilisierenden Menge einer Verbindung, ausgewählt aus der Gruppe, bestehend aus
i) Hydroxylaminstabilisatoren,
ii) O-substituierten Hydroxylaminstabilisatoren,
iii) Nitronstabilisatoren und
iv) Aminoxidstabilisatoren, umfaßt.

2. Verfahren nach Anspruch 1, wobei der Polyester oder das Polyamid der Komponente (a) 95 bis 99,99 Gew.-% beträgt und die Stabilisatoren der Komponente (b) insgesamt 5 bis 0,01 Gew.-% betragen, bezogen auf das Gesamtgewicht von (a) und (b).

3. Verfahren nach Anspruch 1, wobei der Polyester von Komponente (a) Poly(ethylenterephthalat) PET oder Poly(ethylen-2,6-naphthalin-2,6-dicarboxylat) ist.

4. Verfahren nach Anspruch 1, wobei die Hydroxylaminstabilisatoren von Komponente i) die Verbindungen der Formel 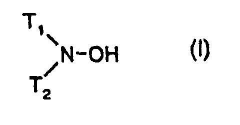 sind, worin
T₁ gerad- oder verzweigtkettiges Alkyl mit 1 bis 36 Kohlenstoffatomen, Cycloalkyl mit 5 bis 12 Kohlenstoffatomen, Aralkyl mit 7 bis 9 Kohlenstoffatomen oder das Aralkyl, substituiert durch ein oder zwei Alkyle mit 1 bis 12 Kohlenstoffatomen oder durch ein oder zwei Halogenatome, ist; und
T₂ Wasserstoff ist, oder unabhängig dieselbe Bedeutung wie T₁ aufweist; oder die Hydroxylaminstabilisatoren von Komponente i) Verbindungen sind, die eine oder mehrere der Gruppen der Formel (II) enthalten 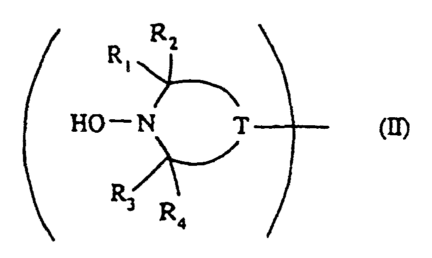 worin
T eine Gruppe ist, die einen fünf- oder sechsgliedrigen Ring bildet; und
R₁, R₂, R₃ und R₄ unabhängig Wasserstoff, Alkyl mit 1 bis 4 Kohlenstoffatomen oder Phenyl sind.

5. Verfahren nach Anspruch 1, wobei die Hydroxylaminstabilisatoren von Komponente i) aus der Gruppe, bestehend aus N,N-Dibenzylhydroxylamin, N,N-Diethylhydroxylamin, N,N-Dioctylhydroxylamin, N,N-Dilaurylhydroxylamin, N,N-Didodecylhydroxylamin, N,N-Ditetradecylhydroxylamin, N,N-Dihexadexylhydroxylamin, N,N-Dioctadecylhydroxylamin, N-Hexadecyl-N-tetradecylhydroxylamin. N-Hexadexyl-N-heptadecylhydroxylamin, N-Hexadecyl-N-octadecylhydroxylamin, N-Heptadecyl-N-octadecylhydroxylamin, N-Methyl-N-octadecylhydroxylamin und N,N-Di(hydriertes talg)hydroxylamin, ausgewählt sind.

6. Verfahren nach Anspruch 1, wobei die Komponente i) N,N-Di(alkyl)hydroxylamin ist, das durch die direkte Oxidation von N,N-Di(hydriertem talg)amin hergestellt wurde.

7. Verfahren nach Anspruch 1, wobei die O-substituierten Hydroxylaminstabilisatoren von Komponente ii) von der Formel III oder IV sind 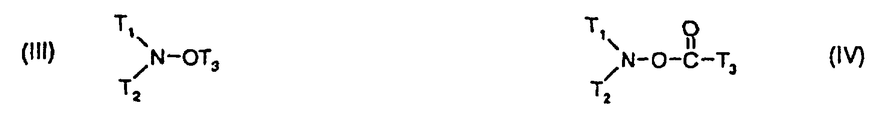 worin
T₁ gerad- oder verzweigtkettiges Alkyl mit 1 bis 36 Kohlenstoffatomen, Cycloalkyl mit 5 bis 12 Kohlenstoffatomen, Aralkyl mit 7 bis 9 Kohlenstoffatomen oder das Aralkyl, substituiert durch ein oder zwei Alkyle mit 1 bis 12 Kohlenstoffatomen oder durch ein oder zwei Halogenatome, ist; und
T₂ Wasserstoff ist, oder unabhängig dieselbe Bedeutung wie T₁ aufweist; und
T₃ Allyl, gerad- oder verzweigtkettiges Alkyl mit 1 bis 36 Kohlenstoffatomen, Cycloalkyl mit 5 bis 18 Kohlenstoffatomen, Cycloalkenyl mit 5 bis 18 Kohlenstoffatomen oder ein gerad- oder verzweigtkettiges Alkyl mit 1 bis 4 Kohlenstoffatomen, substituiert durch Phenyl oder durch Phenyl, substituiert durch ein oder zwei Alkylgruppen mit 1 bis 4 Kohlenstoffatomen oder durch 1 oder 2 Halogenatome, ist.

8. Verfahren nach Anspruch 1, wobei die Komponente ii) O-Allyl-N,N-dioctadecylhydroxylamin oder O-n-Propyl-N,N-dioctadecylhydroxylamin oder N,N-Di(hydriertes talg)acetoxyamin ist.

9. Verfahren nach Anspruch 1, wobei die Nitronstabilisatoren von Komponente iii) von der Formel V sind 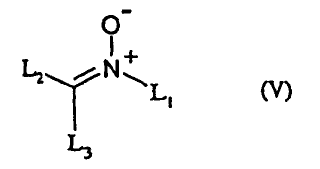 worin
L₁ gerad- oder verzweigtkettiges Alkyl mit 1 bis 36 Kohlenstoffatomen, Cycloalkyl mit 5 bis 12 Kohlenstoffatomen, Aralkyl mit 7 bis 9 Kohlenstoffatomen oder das Aralkyl, substituiert durch ein oder zwei Alkyle mit 1 bis 12 Kohlenstoffatomen oder durch ein oder zwei Halogenatome, ist; und
L₂ und L₃ unabhängig Wasserstoff, gerad- oder verzweigtkettiges Alkyl mit 1 bis 36 Kohlenstoffatomen, Cycloalkyl mit 5 bis 12 Kohlenstoffatomen, Aralkyl mit 7 bis 9 Kohlenstoffatomen oder das Aralkyl, subsituiert durch ein oder zwei Alkyle mit 1 bis 12 Kohlenstoffatomen oder durch ein oder zwei Halogenatome, sind; oder L₁ und L₂ zusammen einen fünf- oder sechsgliedrigen Ring bilden, der das Stickstoffatom einschließt.

10. Verfahren nach Anspruch 1, wobei die Nitronstabilisatoren von Komponente iii) aus der Gruppe, bestehend aus N-Benzyl-α-phenylnitron, N-Ethyl-α-methylnitron, N-Octyl-α-heptylnitron, N-Lauryl-α-undecylnitron, N-Tetradecyl-α-tridecylnitron, N-Hexadecyl-α-pentadecylnitron, N-Octadecyl-α-heptadecylnitron, N-Hexadecyl-α-heptadecylnitron, N-Octadecyl-α-pentadecylnitron, N-Heptadecyl-α-heptadecylnitron, N-Octadecyl-α-hexadecylnitron, N-Methyl-α-heptadecylnitron und das Nitron, das aus N,N-Di(hydriertem talg)hydroxylamin stammt, ausgewählt sind.

11. Verfahren nach Anspruch 1, wobei die Aminoxidstabilisatoren von Komponente iv) Verbindungen der Formel VI sind 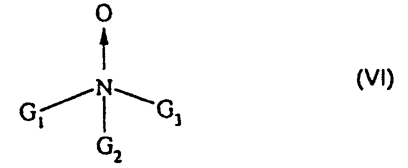 worin
G₁ und G₂ unabhängig ein gerad- oder verzweigtkettiges Alkyl mit 6 bis 36 Kohlenstoffatomen, Aryl mit 6 bis 12 Kohlenstoffatomen, Aralkyl mit 7 bis 36 Kohlenstoffatomen, Alkaryl mit 7 bis 36 Kohlenstoffatomen, Cycloalkyl mit 5 bis 36 Kohlenstoffatomen, Alkcycloalkyl mit 6 bis 36 Kohlenstoffatomen oder Cycloalkylalkyl mit 6 bis 36 Kohlenstoffatomen sind; G₃ gerad- oder verzweigtkettiges Alkyl mit 1 bis 36 Kohlenstoffatomen, Aryl mit 6 bis 12 Kohlenstoffatomen, Aralkyl mit 7 bis 36 Kohlenstoffatomen, Alkaryl mit 7 bis 36 Kohlenstoffatomen, Cycloalkyl mit 5 bis 36 Kohlenstoffatomen, Alkcycloalkyl mit 6 bis 36 Kohlenstoffatomen oder Cycloalkylalkyl mit 6 bis 36 Kohlenstoffatomen ist; mit der Maßgabe, daß mindestens eines von G₁, G₂ und G₃ eine β-Kohlenstoff-Wasserstoff-Bindung enthält; und wobei die Arylgruppen durch ein bis drei Halogene, Alkyl mit 1 bis 8 Kohlenstoffatomen, Alkoxy mit 1 bis 8 Kohlenstoffatomen oder Kombinationen davon substituiert sein können; und wobei die Alkyl-, Aralkyl-, Alkaryl-, Cycloalkyl-, Alkcycloalkyl- und Cycloalkylalkylgruppen durch eine bis sechzehn -O-, -S-, -SO-, -SO₂-, -COO-, -OCO-, -CO-, -NG₄-, -CONG₄- und -NG₄CO-Gruppen unterbrochen sein können; oder wobei die Alkyl-, Aralkyl-, Alkaryl-, Cyclalkyl-, Alkcycloalkyl- und Cycloalkylalkylgruppen durch eine bis sechzehn Gruppen substituiert sein können, ausgewählt aus -OG₄, -SG₄, -COOG₄, -OCOG₄, -COG₄, -N(G₄)₂, -CON(G₄)₂, -NG₄COG₄ und 5- und 6-gliedrigen Ringen, enthaltend die -C(CH₃)(CH₂Rₓ)NL(CH₂Rₓ)(CH₃)C-Gruppe, oder wobei die Alkyl-, Aralkyl-, Alkaryl-, Cycloalkyl-, Alkcycloalkyl- und Cycloalkylalkylgruppen sowohl unterbrochen als auch durch die obengenannten Gruppen substituiert sind; und
worin
G₄ unabhängig Wasserstoff oder Alkyl mit 1 bis 8 Kohlenstoffatomen ist;
Rₓ Wasserstoff oder Methyl ist;
L Wasserstoff, Hydroxy, eine gerad- oder verzweigtkettige C₁₋₃₀-Alkylkomponente, eine -C(O)R-Komponente, wo R eine gerad- oder verzweigtkettige C₁₋₃₀-Alkylgruppe ist, oder eine -OR_{y}-Komponente ist; und
Ry gerad- oder verzweigtkettiges C₁₋₃₀-Alkyl, C₂-C₃₀-Alkenyl, C₂-C₃₀-Alkinyl, C₅-C₁₂-Cycloalkyl, C₆-C₁₀-Bicycloalkyl, C₅-C₈-Cycloalkenyl, C₆-C₁₀-Aryl, C₇-C₉-Aralkyl, C₇-C₉-Aralkyl, substituiert durch Alkyl oder Aryl, oder -CO(D) ist, wo D C₁-C₁₈-Alkyl, C₁-C₁₈-Alkoxy, Phenyl, Phenyl, substituiert durch Hydroxy, Alkyl oder Alkoxy, oder Amino oder Amino, mono- oder disubsitutiert durch Alkyl oder Phenyl, ist.

12. Verfahren nach Anspruch 1, umfassend gegebenenfalls
(c) ein Polymer, das Poly(vinylalkohol) oder ein Ethylen/Vinylalkohol-Copolymer ist; und gegebenenfalls
(d) einen mehrwertigen Alkohol der Formel E-(OH)ₙ, wo n 2 bis 4000 ist und E eine Hydrocarbylkomponente ist; und gegebenenfalls
(e) ein Polymer, das Polyacrylamid, Polymethacrylamid oder ein Acrylamid- oder Methacrylamidcopolymer mit mindestens einem ethylenisch ungesättigten Comonomer ist.

13. Verfahren nach Anspruch 1, umfassend außerdem (c) ein oder mehrere Farbmittel, ausgewählt aus der Gruppe, bestehend aus Pigmenten und Farbstoffen.

14. Verfahren zur Verhinderung der Bildung von Aldehydverunreinigungen während des Schmelzverarbeitens von (a) einem ein- oder mehrschichtigen Polyester- oder Polyamidbehälter oder -film, der mindestens eine Schicht umfaßt, welches das Einbringen in das Material (b) einer effektiven Menge einer Verbindung, ausgewählt aus der Gruppe, bestehend aus
i) Hydroxylaminstabilisatoren,
ii) O-substituierten Hydroxylaminstabilisatoren,
iii) Nitronstabilisatoren und
iv) Aminoxidstabilisatoren, umfaßt.

15. Verfahren nach Anspruch 14, wobei der Behälter eine stabile Flasche ist.

16. Verwendung von Komponente (b) nach Anspruch 1 zur Verhinderung der Bildung von Aldehydverunreinigungen während des Schmelzverarbeitens eines Polyesters oder eines Polyamids.

## Revendications

1. Procédé destiné à empêcher la formation de contaminants aldéhydiques pendant la transformation par fusion de (a) un polyester ou polyamide qui comprend l'incorporation dans ledit polyester ou polyamide de (b) une quantité stabilisante efficace d'un composé choisi dans le groupe constitué de
(i.) stabilisants hydroxylamine,
(ii.) stabilisants hydroxylamine O-substitués,
(iii.) stabilisants nitrone, et
(iv.) stabilisants oxyde d'amine.

2. Procédé selon la revendication 1 dans lequel le polyester ou polyamide du composant (a) est 95 à 99,99 % en poids et les stabilisants du composant (b), au total, sont de 5 à 0, 01 % en poids, sur la base du poids total de (a) et (b).

3. Procédé selon la revendication 1 dans lequel le polyester du composant (a) est le polytéréphtalate d'éthylène PET ou le poly(éthylène-2,6-naphtalène-2,6-dicarboxylate).

4. Procédé selon la revendication 1 dans lequel les stabilisants hydroxylamine du composant i.) sont des composés de formule I 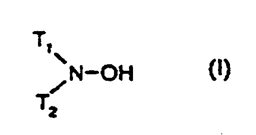 dans laquelle
T₁ est un alkyle à chaîne linéaire ou ramifié de 1 à 36 atomes de carbone, cycloalkyle de 5 à 12 atomes de carbone, aralkyle de 7 à 9 atomes de carbone, ou ledit aralkyle substitué par un ou deux alkyles de 1 à 12 atomes de carbone ou par un ou deux atomes d'halogène ; et
T₂ est un hydrogène, ou indépendamment a la même signification que T₁ ; ou les stabilisants hydroxylamine du composant i.) sont des composés qui contiennent un ou plusieurs des groupes de formule (II) 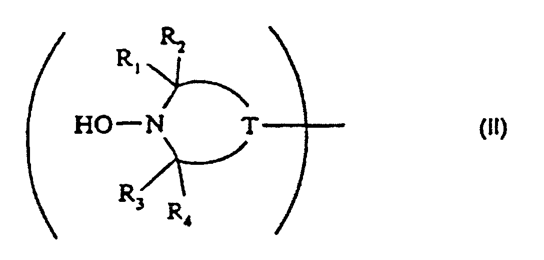 dans laquelle
T est un groupe formant un cycle à cinq ou six chaînons ; et
R₁, R₂, R₃ et R₄ sont indépendamment un hydrogène, alkyle de 1 à 4 atomes de carbone ou phényle.

5. Procédé selon la revendication 1 dans lequel les stabilisants hydroxylamine du composant i.) sont choisis dans le groupe constitué de N,N-dibenzylhydroxylamine, N,N-diéthylhydroxylamine, N,N-dioctylhydroxylamine, N,N-dilaurylhydroxylamine, N,N-didodécylhydroxylamine, N,N-ditétradécylhydroxylamine, N,N-dihexadécylhydroxylamine, N,N-dioctadécylhydroxylamine, N-hexadécyl-N-tétradécylhydroxylamine, N-hexadécyl-N-heptadécylhydroxylamine, N-hexadécyl-N-octadécyl-hydroxylamine, N-heptadécyl-N-octadécylhydroxylamine, N-méthyl-N-octadécylhydroxylamine et N,N-di(suif hydrogéné)hydroxylamine.

6. Procédé selon la revendication 1 dans lequel le composant i.) est la N,N-di(alkyl)hydroxylamine produite par l'oxydation directe de la N,N-di(suif hydrogéné)amine.

7. Procédé selon la revendication 1 dans lequel les stabilisants hydroxylamine O-substitués du composant ii.) sont de formule III ou IV 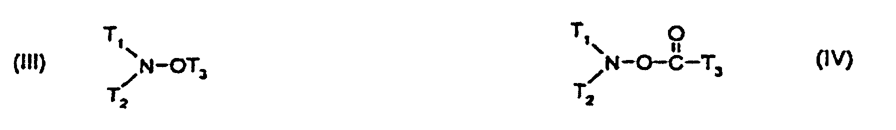 dans laquelle
T₁ est un alkyle à chaîne linéaire ou ramifié de 1 à 36 atomes de carbone, cycloalkyle de 5 à 12 atomes de carbone, aralkyle de 7 à 9 atomes de carbone, ou ledit aralkyle substitué par un ou deux alkyles de 1 à 12 atomes de carbone ou par un ou deux atomes d'halogène ;
T₂ est un hydrogène, ou indépendamment a la même signification que T₁ ; et
T₃ est un allyle, alkyle à chaîne linéaire ou ramifié de 1 à 36 atomes de carbone, cycloalkyle de 5 à 18 atomes de carbone, cycloalcényle de 5 à 18 atomes de carbone ou un alkyle à chaîne linéaire ou ramifié de 1 à 4 atomes de carbone substitué par un phényle ou par un phényle substitué par un ou deux groupes alkyle de 1 à 4 atomes de carbone ou par 1 ou 2 atomes d'halogène.

8. Procédé selon la revendication 1 dans lequel le composant ii.) est l'O-allyl-N,N-dioctadécylhydroxylamine ou O-n-propyl-N,N-dioctadécylhydroxylamine ou N,N-di(suif hydrogéné)acétoxyamine.

9. Procédé selon la revendication 1 dans lequel les stabilisants nitrone du composant iii.) sont de formule V 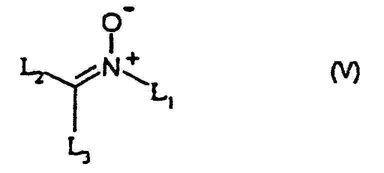 dans laquelle
L₁ est un alkyle à chaîne linéaire ou ramifié de 1 à 36 atomes de carbone, cycloalkyle de 5 à 12 atomes de carbone, aralkyle de 7 à 9 atomes de carbone, ou ledit aralkyle substitué par un ou deux alkyles de 1 à 12 atomes de carbone ou par un ou deux atomes d'halogène ; et
L₂ et L₃ sont indépendamment un hydrogène, un alkyle à chaîne linéaire ou ramifié de 1 à 36 atomes de carbone, cycloalkyle de 5 à 12 atomes de carbone, aralkyle de 7 à 9 atomes de carbone, ou ledit aralkyle substitué par un ou deux alkyles de 1 à 12 atomes de carbone ou par un ou deux atomes d' halogène ; ou L₁ et L₂ forment ensemble un cycle à cinq ou six chaînons comprenant l'atome d'azote.

10. Procédé selon la revendication 1 dans lequel les stabilisants nitrone du composant iii.) sont choisis dans le groupe constitué de la N-benzyl-α-phénylnitrone, N-éthyl-α-méthylnitrone, N-octyl-α-heptylnitrone, N-lauryl-α-undécylnitrone, N-tétradécyl-α-tridécylnitrone, N-hexadécyl-α-pentadécylnitrone, N-octadécyl-α-heptadécylnitrone, N-hexadécyl-α-heptadécylnitrone, N-octadécyl-α-pentadécylnitrone, N-heptadécyl-α-heptadécylnitrone, N-octadécyl-α-hexadécylnitrone, N-méthyl-α-heptadécylnitrone et la nitrone dérivée de la N,N-di(suif hydrogéné)-hydroxylamine.

11. Procédé selon la revendication 1 dans lequel les stabilisants oxyde d'amine du composant iv.) sont des composés de formule VI 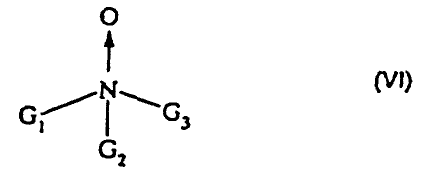 dans laquelle
G₁ et G₂ sont indépendamment un alkyle à chaîne linéaire ou ramifié de 6 à 36 atomes de carbone, aryle de 6 à 12 atomes de carbone, aralkyle de 7 à 36 atomes de carbone, alkaryle de 7 à 36 atomes de carbone, cycloalkyle de 5 à 36 atomes de carbone, alkylcycloalkyle de 6 à 36 atomes de carbone ou cycloalkylalkyle de 6 à 36 atomes de carbone ;
G₃ est un alkyle à chaîne linéaire ou ramifié de 1 à 36 atomes de carbone, aryle de 6 à 12 atomes de carbone, aralkyle de 7 à 36 atomes de carbone, alkaryle de 7 à 36 atomes de carbone, cycloalkyle de 5 à 36 atomes de carbone, alkylcycloalkyle de 6 à 36 atomes de carbone ou cycloalkylalkyle de 6 à 36 atomes de carbone ; sous réserve qu'au moins l'un de G₁, G₂ et G₃ contienne une liaison carbone-hydrogène b ; et dans lequel lesdits groupes aryle peuvent être substitués par un à trois halogènes, alkyle de 1 à 8 atomes de carbone, alcoxy de 1 à 8 atomes de carbone ou leurs combinaisons ; et dans lequel lesdits groupes alkyle, aralkyle, alkaryle, cycloalkyle, alkylcycloalkyle et cycloalkylalkyle peuvent être interrompus par un à seize groupes -O-, -S-, -SO-, -SO₂-, -COO-, -OCO-, -CO-, -NG₄-, -CONG₄- et -NG₄CO-, ou dans lequel lesdits groupes alkyle, aralkyle, alkaryle, cycloalkyle, alkylcycloalkyle et cycloalkyl-alkyle peuvent être substitués par un à seize groupes choisis parmi -OG₄-, -SG₄-, -COOG₄-, -OCOG₄-, -COG₄-, -N(G₄)₂, -CON(G₄)₂, -NG₄COG₄ et les cycles à 5 et 6 chaînons contenant le groupe -C(CH₃)(CH₂Rₓ,)-NL(CH₂Rₓ)(CH₃)C- ou dans lequel lesdits groupes alkyle, aralkyle, alkaryle, cycloalkyle, alkylcycloalkyle et cycloalkylalkyle sont tous deux interrompus et substitués par les groupes mentionnés ci-dessus ; et
dans lesquels G₄ est indépendamment un hydrogène ou alkyle de 1 à 8 atomes de carbone ;
Rₓ est un hydrogène ou méthyle ;
L est un hydrogène, hydroxy, fragment alkyle à chaîne linéaire ou ramifié en C₁ à C₃₀, fragment -C(O)R où
R est un groupe alkyle à chaîne linéaire ou ramifié en C₁ à C₃₀, ou un fragment -OR_{y} ; et
R_{y} est un alkyle à chaîne linéaire ou ramifié en C₁ à C₃₀, alcényle en C₂ à C₃₀, alcynyle en C₂ à C₃₀, cycloalkyle en C₅ à C₁₂, bicycloalkyle en C₆ à C₁₀, cycloalcényle en C₅ à C₈, aryle en C₆ à C₁₀, aralkyle en C₇ à C₉, aralkyle en C₇ à C₉ substitué par un alkyle ou aryle, ou -CO(D), où D est un alkyle en C₁ à C₁₈, alcoxy en C₁ à C₁₈, phényle, phényle substitué par un hydroxy, alkyle ou alcoxy, ou amino ou amino mono- ou disubstitué par un alkyle ou phényle.

12. Procédé selon la revendication 1 comprenant éventuellement
(c) un polymère qui est l'alcool polyvinylique ou un copolymère éthylène/vinylalcool ; et éventuellement
(d) un alcool polyhydroxylé de formule E-(OH)ₙ, où n est de 2 à 4000, et E est un fragment hydrocarbyle ; et éventuellement
(e) un polymère qui est un polyacrylamide, polyméthacrylamide ou un copolymère d'acrylamide ou méthacrylamide ayant au moins un comonomère éthyléniquement insaturé.

13. Procédé selon la revendication 1 comprenant additionnellement (c) un ou plusieurs colorants choisis dans le groupe constitué des pigments et des colorants.

14. Procédé destiné à empêcher la formation de contaminants aldéhydiques pendant la transformation par fusion d'un (a) récipient ou film de polyester ou polyamide mono- ou multicouche qui comprend au moins une couche qui comprend l'incorporation dans ledit matériau (b) d'une quantité efficace d'un composé choisi dans le groupe constitué des
(i.) stabilisants hydroxylamine,
(ii.) stabilisants hydroxylamine O-substitués,
(iii.) stabilisants nitrone, et
(iv.) stabilisants oxyde d'amine.

15. Procédé selon la revendication 14 dans lequel le récipient est une bouteille rigide.

16. Utilisation du composant (b) selon la revendication 1 pour empêcher la formation de contaminants aldéhydiques pendant la transformation par fusion d'un polyester ou d'un polyamide.
